# EUROPEAN PATENT APPLICATION

(11) **EP 4 852 479 A1**
(43) Date of publication of application: **09.12.2026**
(21) Application number: 25757625.6
(22) Date of filing: 10.02.2025
(51) Int. Cl.: H04W 12/03

(54) **COMMUNICATION METHOD AND RELATED APPARATUS**

(30) Priority: 20.02.2024 CN 202410193052
(71) Applicant: HUAWEI TECHNOLOGIES CO., LTD., Shenzhen, Guangdong 518129 (CN)
(72) Inventor: WANG, Yong, Shenzhen, Guangdong 518129 (CN); WANG, Jian, Shenzhen, Guangdong 518129 (CN)
(74) Representative: Huawei European IPR
(86) International application number: PCT/CN2025/076584
(87) International publication number: WO 2025/176028

(57) **Abstract**

A communication method and a related apparatus are disclosed, applied to the field of short-range communication technologies. In this application, a first node is separately connected to a second node and a third node, and the second node and the third node are managed by the first node. The first node may generate first information, send the first information to the second node, and send the first information to the third node. The second node and the third node separately receive the first information, and perform, based on the first information, security protection on data transmitted between the second node and the third node. This application can implement direct and secure data transmission between two nodes managed by another node, thereby improving data transmission efficiency and communication security.

## Description

This application claims priority to Chinese Patent Application No. 202410193052.9, filed with the China National Intellectual Property Administration on February 20, 2024 and entitled "COMMUNICATION METHOD AND RELATED APPARATUS", which is incorporated herein by reference in its entirety.

### TECHNICAL FIELD

This application relates to the field of communication technologies, and in particular, to the field of short-range communication technologies, for example, communication in scenarios such as intelligent vehicles, smart homes, intelligent terminals, and smart manufacturing, and specifically relates to a communication method and a related apparatus.

### BACKGROUND

With continuous development of communication technologies, smart application scenarios such as smart homes, intelligent cockpits, intelligent driving, smart manufacturing, and smart transportation emerge. A communication system that implements various service functions not only enhances productivity but also brings convenience and enjoyment to people's life. People have higher requirements on functions of the communication system, causing continuous increase of a quantity and types of nodes in the communication system. In most communication systems including a plurality of nodes, identities and communication capabilities of the nodes generally greatly differ, to facilitate management of the system with the plurality of node, and be compatible with nodes with different calculation capabilities and communication capabilities. However, the difference between the nodes indirectly limits a connection between the nodes.

A part of communication systems include a primary node and a secondary node. The primary node has a strong communication capability and has a capability of managing the secondary node, and may establish links with a plurality of secondary nodes, so that the primary node and the secondary node can communicate with each other to implement various functions. In this type of communication system, the secondary nodes generally do not have a capability of establishing a link with each other, and as a result, a communication requirement between the secondary nodes is difficult to be implemented. Data needing to be transmitted between two secondary nodes usually relies on the primary node for forwarding. This communication manner in which the primary node performs forwarding not only increases communication pressure of the primary node, but also hinders the secondary nodes from obtaining a parameter related to secure communication through negotiation, thereby compromising security of data transmission between the secondary nodes.

### SUMMARY

This application provides a communication method and a related apparatus, to support direct and secure data transmission between two nodes managed by another node, thereby improving data transmission efficiency and communication security.

According to a first aspect, this application provides a communication method, including: A first node generates first information, sends the first information to a second node, and sends the first information to a third node, where the first information is used to perform security protection on data transmitted between the second node and the third node. The first node is separately connected to the second node and the third node, and the second node and the third node are managed by the first node.

The security protection includes integrity protection and/or confidentiality protection (for example, encryption/decryption). The management refers to a communication process in which another node can be defined, decided, or configured (for example, a communication resource is allocated or a parameter in the communication process is set). In some implementations, the second node and the third node are managed by the first node, that is, the first node is a node that sends resource management information, and the second node and the third node are nodes that receive the resource management information and send and/or receive data based on the resource management information. The resource management information includes access layer resource management information.

In this application, the second node and the third node are two nodes managed by the first node, and the first node generates the first information for the second node and the third node, so that both the second node and the third node can perform security protection on a data transmission process between the second node and the third node based on the first information provided by the first node. On one hand, this application implements direct data transmission between two nodes managed by another node, thereby improving data transmission efficiency. On the other hand, security protection may be performed on the data communicated between the two nodes based on the first information generated and distributed by the first node, thereby improving communication security.

Optionally, the first information may be used to perform security protection on a point-to-point link between the second node and the third node, that is, the data transmitted between the second node and the third node is specifically transmitted through a communication link between the second node and the third node. Certainly, this application is also applicable to a case in which the first information is used to perform security protection on non-connectivity communication between the second node and the third node. For example, in some solutions, the first information may be used to perform security protection on data transmitted, in a broadcast manner, between the second node and the third node.

Optionally, the method may be performed by a module in the first node, for example, by a chip or a software module.

In a possible implementation of the first aspect, sending the first information to the second node includes: sending a first message to the second node, where the first information is carried in the first message. The first message indicates the second node to establish a link with the third node. For example, the first message has a specific format or carries special information, to indicate the second node to establish the link with the third node. For example, the first message carries configuration information of the link, and the second node may establish the link with the third node based on the configuration information of the link. Optionally, the configuration information of the link is included in the resource management information.

In the foregoing implementation, the second node and the third node may be indicated by the first node to establish the point-to-point link between the second node and the third node. The first information may be carried in the first message, so that a quantity of pieces of signaling in a link establishment process can be reduced, and transmission efficiency can be improved.

In this specification, the link is a point-to-point and direct link between two nodes, and may also be referred to as a bearer (for example, an access layer bearer), a connection, an association, or the like in some scenarios. For example, the first node may be a management node (or referred to as a G node), and the second node and the third node may be terminal nodes (or referred to as T nodes). The first message is, for example, an asynchronous TT link establishment indication, to indicate to establish a TT link (or referred to as a T-T link) between the second node and the third node, where the T-T link is a link between the T nodes.

In still another possible implementation of the first aspect, sending the first information to the third node includes: sending a second message to the third node, where the first information is carried in the second message. The second message indicates the third node to establish a communication link with the second node. For example, the second message is an asynchronous TT link establishment indication.

Optionally, the second message carries configuration information of the link, and the third node may establish the link with the second node based on the configuration information of the link.

In still another possible implementation of the first aspect, the first information sent to the second node is carried in a third message, the third message is different from the first message, and the third message is, for example, security parameter indication information.

In still another possible implementation of the first aspect, the method further includes: sending a first message to the second node. The first message indicates the second node to establish a communication link with the third node.

Further, the first information is not carried in the first message. In this implementation, the first node sends the first message to the second node to indicate the second node to establish the communication link with the third node, and sends the first information to the second node through an additional message (for example, the third message), so that a function of the message is more detailed and refined, and reusability and combination flexibility of a message format are improved.

In still another possible implementation of the first aspect, the method further includes: sending a second message to the third node, where the second message indicates the third node to establish a communication link with the second node. Further, the first information is not carried in the second message.

In still another possible implementation of the first aspect, the first information sent to the third node is carried in a fourth message, the fourth message is different from the second message, and the fourth message is, for example, security parameter indication information.

In still another possible implementation of the first aspect, the first information includes a first indication. The first indication is carried in a first field, and a value of the first field may indicate enabling statuses of encryption and integrity protection for the link between the second node and the third node.

For example, when the first field is a first value, it indicates that both encryption and integrity protection for the link between the second node and the third node are enabled. When the first field is a second value, it indicates that encryption for the link between the second node and the third node is disabled and integrity protection for the link between the second node and the third node is enabled. When the first field is a third value, it indicates that encryption for the link between the second node and the third node is enabled and integrity protection for the link between the second node and the third node is disabled. When the first field is a fourth value, it indicates that encryption for the link between the second node and the third node is enabled and integrity protection for the link between the second node and the third node is disabled.

Optionally, the first indication is included in the first message or the third message. Similarly, the first indication is included in the second message or the fourth message. For a related value of the first indication, refer to the foregoing descriptions.

In still another possible implementation of the first aspect, the first message includes a second indication, and the second indication indicates the second node to send data first or send data later. A node that performs data transmission first is a first transmission node, and a node that performs data transmission later is a late transmission node.

For example, the second indication is carried in a second field, and a value of the second field may indicate the second node to send data first or send data later.

In still another possible implementation of the first aspect, the second message includes a third indication, and the third indication indicates the third node to send data first or send data later. For example, the third indication is carried in a third field, and a value of the third field may indicate the second node to send data first or send data later.

In still another possible implementation of the first aspect, the first information may include one or more of a security algorithm indication, a key indication, an indication of a parameter participating in a security algorithm, a security-related status indication, or the like. The security algorithm includes one or more of an encryption algorithm, an integrity protection algorithm, a key derivation algorithm, a key agreement algorithm, or the like. A key is a confidential parameter input during execution of the security algorithm. The parameter participating in the security algorithm is a parameter, for example, an encryption salt or a fresh parameter, that is input during execution of the security algorithm in addition to the key, to further improve security. The security-related status indication may be used to configure a status parameter. For example, the security-related status indication may include a first indication, and the first indication indicates an enabling status of encryption and/or integrity protection.

Optionally, the first information may be sent through one message, or may be sent through a plurality of messages.

In still another possible implementation of the first aspect, the first information includes one or more of the following information: an integrity protection algorithm indication, an integrity protection key indication, an encryption algorithm indication, an encryption key indication, a first parameter, the first indication, or the like.

The integrity protection algorithm indication indicates a first integrity protection algorithm used for the link between the second node and the third node. Optionally, the first integrity protection algorithm is an algorithm with a highest priority in integrity protection algorithms supported by the second node and the third node, or the first integrity protection algorithm may be an algorithm selected by the first node. The integrity protection key indication indicates a key used by an integrity protection algorithm (for example, the first integrity protection algorithm). The encryption algorithm indication indicates a first encryption algorithm used for the link between the second node and the third node. Optionally, the first encryption algorithm is an algorithm with a highest priority in encryption algorithms supported by the second node and the third node, or the first encryption algorithm may be an algorithm selected by the first node. The encryption key indication indicates a key used by an encryption algorithm (for example, the first encryption algorithm). The first parameter is used to obtain an input parameter of an encryption and/or integrity protection process between the second node and the third node. For example, the first parameter is an initialization base value or an initialization vector.

According to a second aspect, this application provides a communication method, including: receiving first information from a first node, and performing security protection on first data based on the first information, where the first data is data transmitted between a second node and a third node.

The method is applied to the second node. Optionally, the method may be performed by a module in the second node, for example, by a chip or a software module.

In a possible implementation of the second aspect, receiving the first information from the first node includes: receiving a first message from the first node, where the first information is carried in the first message. The first message indicates the second node to establish a connection to the third node.

In still another possible implementation of the second aspect, the method further includes: receiving a first message from the first node. The first message indicates the second node to establish a connection to the third node.

In still another possible implementation of the second aspect, the method further includes: establishing a communication link with the third node.

In still another possible implementation of the second aspect, the first information includes one or more of the following information: an integrity protection algorithm indication, an integrity protection key indication, an encryption algorithm indication, an encryption key indication, or a first parameter.

The integrity protection algorithm indication indicates a first integrity protection algorithm used for the link between the second node and the third node. Optionally, the first integrity protection algorithm is an algorithm with a highest priority in integrity protection algorithms supported by the second node and the third node, or the first integrity protection algorithm may be an algorithm selected by the first node. The integrity protection key indication indicates a key used by an integrity protection algorithm. The encryption algorithm indication indicates a first encryption algorithm used for the link between the second node and the third node. Optionally, the first encryption algorithm is an algorithm with a highest priority in encryption algorithms supported by the second node and the third node, or the first encryption algorithm may be an algorithm selected by the first node.

The encryption key indication indicates a key used by an encryption algorithm. The first parameter is used to obtain an input parameter of an encryption and/or integrity protection process between the second node and the third node. For example, the first parameter is an initialization base value or an initialization vector.

In still another possible implementation of the second aspect, the first information includes the integrity protection algorithm indication and the integrity protection key indication, the integrity protection algorithm indication indicates the first integrity protection algorithm, and the integrity protection key indication indicates the integrity protection key. Performing security protection on the first data based on the first information includes: performing integrity protection on the first data based on the first integrity protection algorithm and the integrity protection key.

In still another possible implementation of the second aspect, the first information includes the integrity protection algorithm indication, and the integrity protection algorithm indication indicates the first integrity protection algorithm. Performing security protection on the first data based on the first information includes: performing integrity protection on the first data based on the first integrity protection algorithm and an integrity protection key. The integrity protection key is obtained through negotiation between the second node and the third node.

In still another possible implementation of the second aspect, the first information includes the integrity protection key indication, and the integrity protection key indication indicates the integrity protection key. Performing security protection on the first data based on the first information includes: performing integrity protection on the first data based on the first integrity protection algorithm and the integrity protection key. The first integrity protection algorithm is obtained through negotiation between the second node and the third node.

In still another possible implementation of the second aspect, performing integrity protection on the first data based on the first integrity protection algorithm and the integrity protection key includes: obtaining an integrity check code through calculation based on the first integrity protection algorithm, the integrity protection key, a first integrity protection input, and the first data.

The integrity check code is used to check integrity of the first data. For example, the message integrity check code and the first data may be carried in a same data packet.

In still another possible implementation of the second aspect, the first integrity protection input includes a direction indication and/or a second parameter.

The direction indication indicates a sequence in which a transmitter and a receiver of the first data perform data transmission in an event. For example, when the direction indication is a fifth value, it indicates that a first transmission node performs sending and a late transmission node performs receiving, that is, the first data is data sent by the first transmission node to the late transmission node. When the direction indication is a sixth value, it indicates a late transmission node performs sending and a first transmission node performs receiving, that is, the first data is sent by the late transmission node to the first transmission node.

The first transmission node is a node that performs data transmission first in the event, and the late transmission node is a node that performs data transmission later in the event.

In an implementation, the second parameter is related to the first parameter included in the first information. For example, the first parameter is an initialization base value of A bits, and processing (for example, exclusive OR or exclusive NOR processing) is performed on the initialization base value based on another bit sequence (for example, B bits), to obtain a final value as the second parameter, where A and B are integers greater than or equal to 1. Optionally, the bit sequence of the B bits may be related to a type of a radio frame. For example, the second parameter occupies 64 bits, where the initialization base value is a 64-bit value generated by using a random number generator, and for a type 1 radio frame and a type 2 radio frame, a final value (64 bits) is obtained by performing an exclusive OR operation on the least significant 32 bits of the initialization base value and the least significant 32 bits of a synchronization sequence. For a type 3 radio frame and a type 4 radio frame, a final value is obtained by performing an exclusive OR operation on the least significant 24 bits of the initialization base value and 24 bits of a logical link identifier.

In still another implementation, the second parameter is related to a third parameter from the second node and/or a fourth parameter from the third node. For example, the second node provides the third parameter, the third node provides the fourth parameter, and the second node obtains the second parameter based on the third parameter and the fourth parameter. For example, the second node sends the third parameter (for example, 32 bits) to the third node, and the third node sends the fourth parameter (32 bits) to the second node. The second parameter is a 64-bit value obtained by splicing the third parameter and the fourth parameter.

In still another possible implementation of the second aspect, the first data is carried in a payload of a transmitted data packet. Obtaining the integrity check code through calculation based on the first integrity protection algorithm, the integrity protection key, the first integrity protection input, and the first data includes: obtaining a first output based on the first integrity protection algorithm, the integrity protection key, and the first integrity protection input, obtaining a second output based on the first integrity protection algorithm, the integrity protection key, the first output, and a second integrity protection input, and obtaining, based on the first integrity protection algorithm, the integrity protection key, the second output, and 1^{st} M bytes of the payload of the transmitted data packet, an integrity protection output of a 1^{st} byte corresponding to the payload, where M is an integer, and M≥1.

When the payload of the transmitted data packet is less than or equal to M bytes, the integrity protection output of the 1^{st} byte corresponding to the payload is a final output. When the payload of the transmitted data packet is greater than M bytes, an integrity protection output of i^{th} M bytes corresponding to the payload is obtained based on the first integrity protection algorithm, the integrity protection key, and an integrity protection output of (i-1)^{th} M bytes corresponding to the payload, and an integrity protection output of a last part of bytes corresponding to the payload is used as a final output, where i is an integer and i is an integer from 1 to $\left⌈\frac{Quantity of bytes of the payload}{M}\right⌉$, and the integrity check code is obtained based on the final output. $\left⌈x\right⌉$ represents an integer obtained by rounding up x.

Optionally, obtaining the integrity check code based on the final output includes: using the least significant X bits in the final output as the integrity check code.

In still another possible implementation of the second aspect, the first information includes the encryption algorithm indication and the encryption key indication, the encryption algorithm indication indicates the first encryption algorithm, and the encryption key indication indicates the encryption key. Performing secure communication with the third node based on the first information includes: encrypting the first data based on the first encryption algorithm and the encryption key.

In still another possible implementation of the second aspect, the first information includes the encryption algorithm indication, and the encryption algorithm indication indicates the first encryption algorithm. Performing secure communication with the third node based on the first information includes: encrypting the first data based on the first encryption algorithm and the encryption key, where the encryption key is obtained through negotiation between the second node and the third node.

In still another possible implementation of the second aspect, the first information includes the encryption key indication, and the encryption key indication indicates the encryption key. Performing secure communication with the third node based on the first information includes: encrypting the first data based on the first encryption algorithm and the encryption key, where the first encryption algorithm is obtained through negotiation between the second node and the third node.

In still another possible implementation of the second aspect, encrypting the first data based on the first encryption algorithm and the encryption key includes: encrypting the first data based on the first encryption algorithm, the encryption key, and an encryption input.

The encryption input includes the direction indication and/or the second parameter.

In a possible implementation of the second aspect, the first data is carried in the payload of the transmitted data packet, and encrypting the first data based on the first encryption algorithm and the encryption key includes: for all bytes of the payload, obtaining a j^{th} encryption output based on the first encryption algorithm, the encryption key, a j^{th} K bytes of the payload, and an encryption input corresponding to the j^{th} K bytes, where j is an integer, and j is an integer from 1 to $\left⌈\frac{Quantity of bytes of the payload}{K}\right⌉ + 1$.

In a possible implementation of the second aspect, when integrity protection between the second node and the third node is enabled, an encrypted integrity check code is obtained based on the first encryption algorithm, the encryption key, the integrity check code, and an encryption input corresponding to the integrity check code.

In still another possible implementation of the second aspect, the first message further includes a first indication, the first indication is carried in a first field, and a value of the first field may indicate enabling statuses of encryption and integrity protection for the link between the second node and the third node.

In still another possible implementation of the second aspect, the first message includes a second indication, and the second indication indicates the second node to send data first or send data later. For example, the second indication is carried in a second field, and a value of the second field may indicate the second node to send data first or send data later.

According to a third aspect, this application provides a communication method, including: receiving a first message from a first node, establishing a link with a third node, negotiating with the third node to determine first information, and performing security protection on first data based on the first information. The first message indicates the second node to establish the link with the third node, and the first data is data transmitted between the second node and the third node.

The method is applied to the second node. Optionally, the method may be performed by a module in the second node, for example, by a chip or a software module.

In still another possible implementation of the third aspect, the first information includes one or more of the following information: an integrity protection algorithm indication, an integrity protection key indication, an encryption algorithm indication, an encryption key indication, or a first parameter.

In still another possible implementation of the third aspect, performing security protection on the first data based on the first information includes: performing integrity protection on the first data based on a first integrity protection algorithm and an integrity protection key.

In still another possible implementation of the third aspect, performing secure communication with the third node based on the first information includes: encrypting the first data based on a first encryption algorithm and an encryption key.

In still another possible implementation of the third aspect, the first message includes a first indication, the first indication is carried in a first field, and a value of the first field may indicate enabling statuses of encryption and integrity protection for the link between the second node and the third node.

In still another possible implementation of the third aspect, the first message includes a second indication, and the second indication indicates the second node to send data first or send data later.

According to a fourth aspect, this application provides a communication apparatus, including a unit or a module configured to perform the method described in any one of the first aspect or the possible implementations of the first aspect, or including a unit or a module configured to perform the method described in any one of the second aspect or the possible implementations of the second aspect, or including a unit or a module configured to perform the method described in any one of the third aspect or the possible implementations of the third aspect.

For example, the communication apparatus includes a processing unit and a communication unit. The processing unit is configured to implement one or more operations such as processing, determining, generation, calculation, encryption, and decryption. The communication unit is configured to implement one or more operations such as sending and receiving.

According to a fifth aspect, this application provides a communication apparatus. The communication apparatus includes a processor and an interface circuit. The interface circuit is configured to receive a signal from another communication apparatus and transmit the signal to the processor, or send a signal from the processor to another communication apparatus. The processor is configured to implement, via a logic circuit or by executing code instructions, the method described in any one of the first aspect or the possible implementations of the first aspect, or the method described in any one of the second aspect or the possible implementations of the second aspect, or the method described in any one of the third aspect or the possible implementations of the third aspect.

According to a sixth aspect, this application provides a communication system. The communication system includes a first node, a second node, and a third node. The first node is configured to implement the method in any one of the first aspect or the possible implementations of the first aspect, and the second node and the third node are configured to implement the method in any one of the second aspect or the possible implementations of the second aspect.

According to a seventh aspect, this application provides a communication system. The communication system includes a first node, a second node, and a third node. The first node is configured to send a first message to the second node and send a second message to the third node. The second node and the third node are configured to implement the method in any one of the third aspect or the possible implementations of the third aspect.

According to an eighth aspect, this application provides a terminal. The terminal includes the communication apparatus described in the fourth aspect or the fifth aspect, or includes the communication system described in the sixth aspect or the seventh aspect.

According to a ninth aspect, this application provides a readable storage medium. The readable storage medium is configured to store a computer program. When the computer program is executed by a processor, a communication apparatus including the processor is enabled to implement the method in any one of the first aspect or the possible implementations of the first aspect, or the method in any one of the second aspect or the possible implementations of the second aspect, or the method in any one of the third aspect or the possible implementations of the third aspect.

According to a tenth aspect, this application provides a computer program. When the computer program is executed by a processor, a communication apparatus including the processor is enabled to implement the method in any one of the first aspect or the possible implementations of the first aspect, or the method in any one of the second aspect or the possible implementations of the second aspect, or the method in any one of the third aspect or the possible implementations of the third aspect.

For beneficial effect of the second aspect to the tenth aspect of this application, refer to beneficial effect of the solution in the first aspect.

### BRIEF DESCRIPTION OF DRAWINGS

The following briefly describes accompanying drawings used in describing embodiments.
FIG. 1 is a diagram of an architecture of a communication system;
FIG. 2 is a diagram of an application scenario of a communication system;
FIG. 3 is a diagram of an application scenario of a communication system according to an embodiment of this application;
FIG. 4 is a diagram of an application scenario of still another communication system according to an embodiment of this application;
FIG. 5 is a schematic flowchart of a communication method according to an embodiment of this application;
FIG. 6 is a diagram of an integrity protection process according to an embodiment of this application;
FIG. 7 is a diagram of data content of an integrity protection input according to an embodiment of this application;
FIG. 8 is a diagram of an encryption process according to an embodiment of this application;
FIG. 9 is a diagram of data content of an encryption input according to an embodiment of this application;
FIG. 10 is a schematic flowchart of a communication method according to an embodiment of this application;
FIG. 11 is a schematic flowchart of a communication method according to an embodiment of this application;
FIG. 12 is a schematic flowchart of still another communication method according to an embodiment of this application;
FIG. 13 is a schematic flowchart of still another communication method according to an embodiment of this application;
FIG. 14 is a schematic flowchart of still another communication method according to an embodiment of this application;
FIG. 15 is a diagram of a structure of a communication apparatus according to an embodiment of this application; and
FIG. 16 is a diagram of a structure of still another communication apparatus according to an embodiment of this application.

### DESCRIPTION OF EMBODIMENTS

The following first describes some technical terms.

### 1. Message check code

A message check code, also referred to as an integrity check code, a message authentication code (message authentication code, MAC), a message identification code, a file message authentication code, or an information authentication code, is a small segment of information generated according to a specific algorithm, to check integrity of a segment of message and/or perform identity authentication.

### 2. Node

A node is a device having a communication capability, and includes but is not limited to one or more of user equipment, a network device, an industrial device, and the like. The user equipment includes one or more of a handheld terminal, a wearable terminal, a transportation means, a vehicle-mounted device, a sensing device, a smart home device, a leisure and entertainment device, and the like. The handheld terminal includes but is not limited to a mobile phone, a tablet, or a notebook computer. The wearable device includes but is not limited to headsets, smart bands, smart watches, or smart glasses. The transportation means includes but is not limited to a vehicle, a ship, aircraft, rail transport (such as a subway and a high-speed railway), or a logistics robot (such as an automated guided vehicle (automated guided vehicle, AGV)). The vehicle-mounted device includes but is not limited to a domain controller (domain controller, DC), a screen, a microphone, a speaker, an electronic key, keyless entry, a startup system controller, a battery management system (battery management system, BMS), a battery pack, or a cell. The sensing device includes but is not limited to a camera, a radar, a lidar, an illumination sensor, a temperature sensor, or a humidity sensor. The smart home device includes but is not limited to a projector, a smart television, a smart refrigerator, a smart home gateway, or a security device. The leisure and entertainment device includes but is not limited to a virtual reality (virtual reality, VR) device, a mixed reality (mixed reality, MR) device, a massage chair, a home theater, a game control device, or a 4D cinema cabin. The network device includes but is not limited to a router, a switch, or a base station. The industrial device includes but is not limited to an industrial robot or a mechanical arm.

It should be understood that the communication method, the communication apparatus, the communication system, the node, and the like in embodiments of this application are applicable to a plurality of networks, for example, are applicable to a wired communication network, a wireless communication network, or a network formed by a combination of wired communication and wireless communication. For example, the wireless communication network includes a network connected by using the following communication technologies: SparkLink (SparkLink, or NearLink), 802.11b/g, Bluetooth (Bluetooth), ZigBee (ZigBee), a radio frequency identification (radio frequency identification, RFID) technology, an ultra-wideband (ultra-wideband, UWB) technology, or a wireless short-range communication system. And/or, the wireless communication network includes a long-range connection technology, for example, wireless communication technologies including a long term evolution (long term evolution, long term evolution)-based communication technology, a 5th generation mobile communication technology (5th generation mobile network or 5th generation wireless system, 5th-Generation, 5G or 5G technology for short), a global system for mobile communications (global system for mobile communications, GSM), a general packet radio service (general packet radio service, GPRS), and a universal mobile telecommunications system (universal mobile telecommunications system, UMTS). For another example, the wired communication network includes a network connected by using the following communication technologies: one or more of an optical fiber connection technology, a vehicle-mounted wired communication technology, a controller area network (controller area network, CAN), a local interconnect network (local interconnect network, LIN) bus, a CAN flexible data-rate (CAN flexible data-rate, CAN FD), an automotive Ethernet, or the like.

The node in embodiments of this application may be used in various scenarios such as intelligent vehicles, smart homes, intelligent terminals, smart manufacturing, a smart exhibition hall, a mobile internet (mobile internet, MI), industrial control (industrial control), self driving (self driving), transportation safety (transportation safety), or the internet of things (internet of things, IoT). In some application scenarios or some network types, a device having a similar communication capability may not be referred to as a node. However, for ease of description, devices having communication capabilities are collectively referred to as nodes in embodiments of this application.

### 3. Communication system

A communication system is a system for transmitting information through an electrical signal (or an optical signal), and generally includes a plurality of nodes, and the nodes communicate with each other to transmit information. The nodes in the communication system may have different identities and/or different capabilities. In most communication systems, nodes are classified into a primary node and a secondary node. The primary node is with a strong communication capability and has a capability of managing the secondary node, and may establish links with a plurality of secondary nodes, so that communication can be performed between primary nodes and between the primary node and the secondary node, to implement various functions.

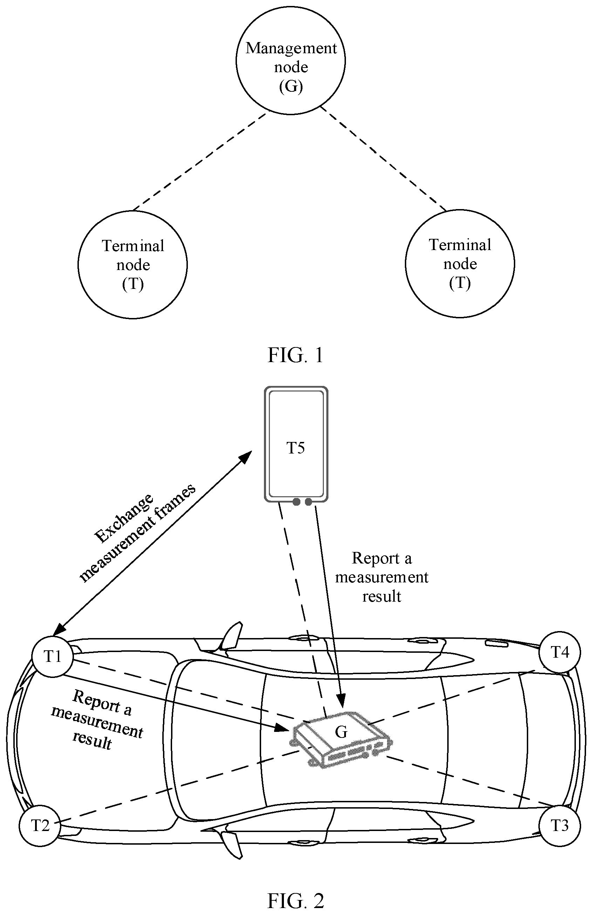

FIG. 1 is a diagram of an architecture of a communication system. The communication system includes a management node (which is considered as a primary node) and a terminal node (which is considered as a secondary node). The terminal node is connected to the management node, and a connection relationship is represented by a dashed line. Communication between the management node and the terminal node includes bidirectional unicast and/or broadcast communication.

The management node has a communication capability and a management capability, and is also referred to as a G node, an access point (access point), an authorization node, or the like in some scenarios. The management capability includes a management capability on communication, for example, can be used to perform connection management, resource scheduling, or information security management. For example, the management node can send resource management information or data scheduling information, for example, access layer resource management information. The terminal node, also referred to as a T node in some scenarios, is a node having a communication capability, and may transmit a service with the management node. In some solutions, the terminal node is a node that receives resource management information (or data scheduling information) and sends data based on the resource management information (or data scheduling information). For example, a terminal device may include user equipment (user equipment, UE), for example, include a device, for example, a barcode, radio frequency identification (radio frequency identification, RFID), a sensor, a global positioning system (global positioning system, GPS), a lidar, or a cell.

It should be understood that identities of the management node and the terminal node are not absolute, and are merely example names for distinguishing operations performed by communication nodes in a possible connection case. In some scenarios, a node belongs to two or even more communication domains at the same time, and is used as a terminal node in a part of communication domains, and may be used as a management node in the other part of communication domains. For ease of understanding, such a node is represented as a G(T) node in some embodiments.

The foregoing explanations of the technical terms may be optionally used in the following embodiments.

With reference to the foregoing description, in some communication systems including a primary node and a secondary node, secondary nodes generally do not have a capability of establishing a link with each other, and as a result, a communication requirement between the secondary nodes is difficult to be implemented. FIG. 2 is a diagram of an application scenario of a communication system. A vehicle includes four location anchors: a T1 node, a T2 node, a T3 node, and a T4 node. The four location anchors are accessed to a primary node (that is, a G node) of the vehicle. The T1 node, the T2 node, the T3 node, and the T4 node each may establish a GT link with the G node. A location tag (for example, a mobile phone and a vehicle key), that is, a T5 node, can also access the G node to establish a GT link with the G node.

In a measurement scenario, measurement is performed between the location tag and the location anchor. A measurement result of the location tag and a measurement result of the location anchor are sent to the G node through the GT link, for the G node to solute, for example, locate the location tag. As shown in FIG. 2, a measurement process between the T1 node and the T5 node is used as an example. The T1 node and the T5 node exchange measurement frames and respectively obtain measurement results, and the T1 node and the T5 node separately report the measurement results to the G node. In a specific implementation, there are usually a plurality of location anchors for interactive measurement, and a measurement process needs to be performed a plurality of times, so that a calculation amount of the primary node (the G node) is large, and a solution speed of a measurement result is low. If a solution function is allocated to each location anchor, the solution speed of the measurement result can be greatly improved. However, when solution of the measurement result is allocated to the location anchor, the measurement result of the location tag needs to be provided to the location anchor. For example, in FIG. 2, the measurement result of the T5 node needs to be provided to the T1 node. Because the T nodes generally do not have a capability of establishing a link with each other, a communication requirement between the T nodes is difficult to be implemented. If forwarding is considered to be performed via the G node, communication pressure of the G node is also increased. In addition, a parameter related to secure communication cannot be obtained through negotiation between the T nodes. As a result, security of data transmission between the T nodes is low, and communication security of the nodes is threatened, thereby affecting security of an entire vehicle.

In view of this, this application provides a communication method and a related apparatus, to support direct and secure data transmission between two nodes managed by another node, thereby improving data transmission efficiency and communication security.

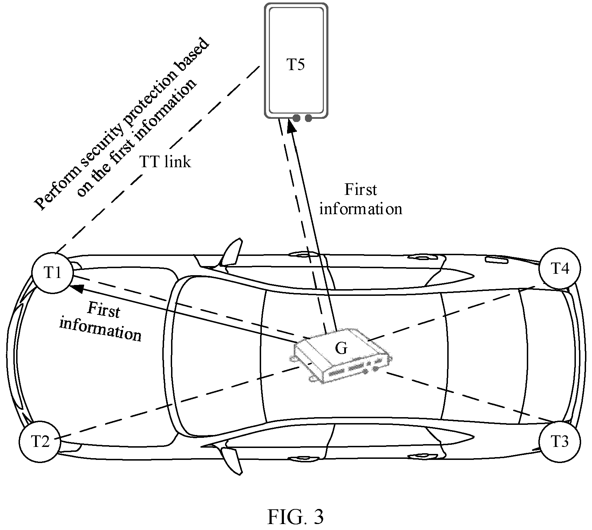

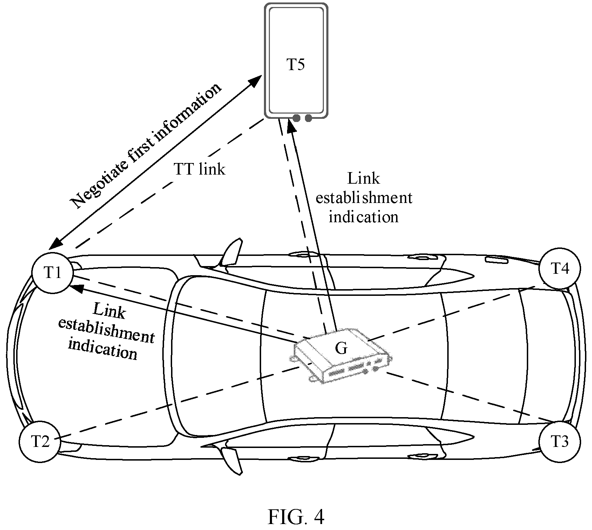

Refer to FIG. 3. In an embodiment, a G node separately sends first information to a T1 node and a T5 node, where the first information is a security-related parameter. The T1 node and the T5 node perform, based on the first information, security protection on data transmitted between the T1 node and the T5 node. Further, the G node further sends configuration information of a link to the T1 node and the T5 node, so that the T1 node and the T5 node establish a TT link based on the configuration information of the link. Refer to FIG. 4. In still another embodiment, a G node sends a link establishment indication to a T1 node and sends a link establishment indication to a T5 node, and the T1 node and the T5 node establish a TT link based on the link establishment indications. The link establishment indication may include configuration information of the link. The T1 node and the T5 node may obtain the first information through negotiation, and perform, based on the first information, security protection on data transmitted between the T1 node and the T5 node. Optionally, the foregoing embodiments may be further combined. In other words, in information used to perform security protection on the data, a part of the information is provided by the G node, and the other part of the information is obtained through negotiation between the T1 node and the T5 node.

In the foregoing embodiment, the measurement result is directly and securely transmitted between the T1 node and the T5 node, and does not need to be forwarded by the G node, thereby improving data transmission efficiency and reducing communication pressure and calculation of the primary node. Because the data transmitted between T1 and T5 is protected based on the first information, communication security can be improved.

Certainly, the foregoing merely uses a ranging process as an example, and uses T1, T5, and G nodes as an example for description. In a specific implementation process, this method is also applicable to a similar technical problem, and is also applicable to a scenario in which a similar problem exists and a communication system including more or fewer nodes.

Methods provided in this application are described below.

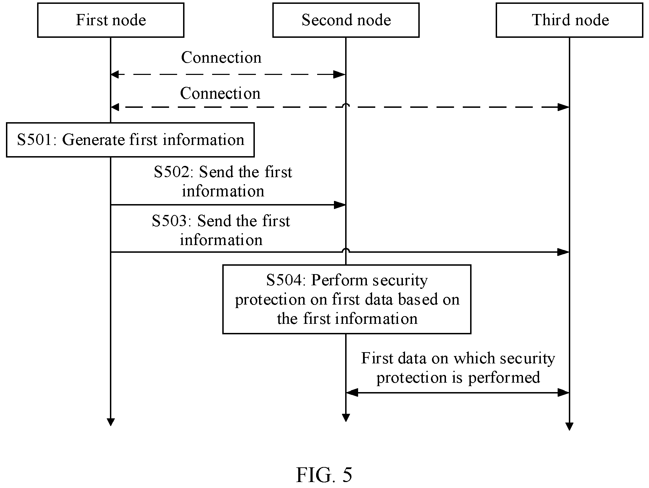

FIG. 5 is a schematic flowchart of a communication method according to an embodiment of this application. Optionally, the method may be applied to a communication system, for example, one or more communication systems in FIG. 1 to FIG. 4. The communication method shown in FIG. 5 may include one or more of step S501 to step S504. It should be understood that, herein, for ease of description, a sequence of step S501 to step S504 is used for description, but this is not intended to limit execution to the foregoing sequence. An execution order, execution time, a quantity of execution times, and the like of the foregoing one or more steps are not limited in embodiments of this application. Step S501 to step S504 are specifically as follows.

Step S501: A first node generates first information.

The first information is a parameter related to communication security. In a possible implementation, the first information includes one or more of a security algorithm indication, a key indication, an indication of a parameter participating in a security algorithm, a security-related status indication, or the like. The security algorithm includes one or more of an encryption algorithm, an integrity protection algorithm, a key derivation algorithm, a key agreement algorithm, or the like. A key is a confidential parameter input during execution of the security algorithm. The parameter participating in the security algorithm is a parameter, for example, an encryption salt or a fresh parameter, that is input during execution of the security algorithm in addition to the key, to further improve security. The security-related status indication may be used to configure a status parameter. For example, the security-related status indication may include a first indication (described below), and the first indication indicates an enabling status of encryption and/or integrity protection.

In some possible implementations, the first information includes one or more of the following information: an integrity protection algorithm indication, an integrity protection key indication, an encryption algorithm indication, an encryption key indication, a first parameter, the first indication, or the like. For example, the first information includes the integrity protection algorithm indication, the integrity protection key indication, the encryption algorithm indication, the encryption key indication, the first parameter, and the first indication. For another example, the first information includes the integrity protection algorithm indication. For another example, the first information includes the encryption algorithm indication. For another example, the first information includes the integrity protection algorithm indication and the encryption algorithm indication. For another example, the first information includes the integrity protection algorithm indication, the integrity protection key indication, the encryption algorithm indication, and the encryption key indication.

The integrity protection algorithm indication indicates an integrity protection algorithm used for a link between a second node and a third node, and is referred to as a first integrity protection algorithm for ease of description, for example, may be an AES-128 algorithm or an SM4 algorithm. For example, with reference to Table 1, when the integrity protection algorithm indication is 0100, it indicates that an "INT1" algorithm is used to perform integrity protection on the link between the second node and the third node. For another example, when the integrity protection algorithm indication is 1000, it indicates that an "AUTH1" algorithm is used to perform integrity protection on the link between the second node and the third node.

**Table 1 Security algorithm information table**

| Algorithm type | Algorithm name | Value corresponding to an algorithm |
|---|---|---|
| Encryption algorithm | ENC0 | 0000 |
| | ENC1 | 0001 |
| | ENC2 | 0010 |
| | ENC3 | 0011 |
| Integrity protection algorithm | INT1 | 0100 |
| | INT2 | 0101 |
| | INT3 | 0110 |
| | INT4 | 0111 |
| Authentication encryption algorithm | AUTH1 | 1000 |
| | AUTH2 | 1001 |
| | AUTH3 | 1010 |
| | AUTH4 | 1011 |

In some implementations, the first integrity protection algorithm is an algorithm with a highest priority in integrity protection algorithms supported by the second node and the third node. For example, integrity protection algorithms supported by the second node are INT1, INT2, and INT4, and integrity protection algorithms supported by the third node are INT1, INT2, INT3, and INT4. If priorities of integrity protection algorithms INT1, INT2, and INT4 supported by both the second node and the third node are respectively 1, 2, and 4 (for example, a smaller number indicates a higher priority), the first integrity protection algorithm is INT1. In other words, the first node may select an algorithm with a highest priority from the integrity protection algorithms supported by the second node and the third node as the first integrity protection algorithm. Certainly, the foregoing implementation is merely an example. In some manners, the first node may determine the first integrity protection algorithm in another manner, for example, select an integrity protection algorithm as the first integrity protection algorithm according to another rule.

The integrity protection key indication indicates a key used by an integrity protection algorithm.

The encryption algorithm indication indicates a first encryption algorithm used for the link between the second node and the third node, and may be, for example, an AES-128 algorithm or an SM4 algorithm. With reference to Table 1, when the encryption algorithm indication is 0000, it indicates that an "ENC0" algorithm is used to encrypt the link between the second node and the third node. For another example, when the encryption algorithm indication is 1000, it indicates that an "AUTH1" algorithm is used to encrypt the link between the second node and the third node. It is not difficult to learn that the encryption algorithm and the integrity protection algorithm may use a same algorithm.

Optionally, the first encryption algorithm is an algorithm with a highest priority in encryption algorithms supported by the second node and the third node, or the first encryption algorithm may be an algorithm selected by the first node.

The encryption key indication indicates a key used by an encryption algorithm.

The first parameter is used to obtain an input parameter of an encryption and/or integrity protection process between the second node and the third node. For example, the first parameter is an initialization base value, and is 64-bit data randomly generated by the first node. For another example, the first parameter is a parameter obtained by processing a 64-bit random number, for example, 64-bit data obtained by performing exclusive OR processing on a part or all of bits in the 64-bit random number and a segment of bit sequence. Certainly, the foregoing quantity of bits is merely an example, and may be replaced with another quantity of bits in specific implementation.

Step S502: The first node sends the first information to the second node.

Correspondingly, the second node receives the first information from the first node. The first information is used to perform security protection on data transmitted between the second node and the third node.

The first node is separately connected to the second node and the third node. With reference to FIG. 5, a communication link is established between the first node and the second node. For example, the first node is a G node, the second node is a T node, and the third node is a T node. A connection is established between the first node and the second node, and a connection is also established between the first node and the third node.

Further, the second node is managed by the first node. The management refers to a communication process in which another node can be defined, decided, or configured (for example, a communication resource is allocated or a parameter in the communication process is set). In some implementations, the second node and the third node are managed by the first node, that is, the first node is a node that sends resource management information, and the second node and the third node are nodes that receive the resource management information and send or receive data based on the resource management information. For example, the resource management information includes access layer resource management information.

Optionally, the first information may be sent through one message, or may be sent through a plurality of messages.

In a possible implementation, the first information is carried in (that is, included in) a first message and sent to the second node. The first message indicates the second node to establish a link with the third node. For example, the first message has a specific format or carries special information, to indicate the second node to establish the link with the third node. For example, the first message carries configuration information of the link, and the second node may establish the link with the third node based on the configuration information of the link. In some solutions, the first message is also referred to as an asynchronous TT link establishment indication, to indicate to establish a TT link (or referred to as a T-T link) between the second node and the third node, where the T-T link is a link between T nodes. Certainly, a name of the message is not strictly limited in this application. In specific implementation, the name of the message, a name of the information, and a name of the parameter may be randomly replaced. In some implementations, the configuration information of the link is included in the resource management information (or the access layer resource management information).

Refer to Table 2 and Table 3. Table 2 and Table 3 are diagrams of a message format of an asynchronous TT link establishment indication according to an embodiment of this application. The asynchronous TT link establishment indication includes the configuration information of the link, for example, a GT/TG mode indication, a radio frame type indication, a logical link identifier, a bandwidth indication, a pilot density indication, a maximum number of protocol data units, or a maximum time offset. For details, refer to Table 2. Details are not described herein again. In this way, the second node may configure the link with the third node based on the configuration information of the link.

**Table 2 Field name, signaling bit width, signaling value range, and a quantity unit of the asynchronous TT link establishment indication**

| Field name | Signaling bit width | Signaling value range | Quantity unit |
|---|---|---|---|
| ... | ... | ... | ... |
| GT/TG mode indication | 1 bit | 0 and 1 | Logical value |
| ... | ... | ... | ... |
| Radio frame type indication of a first transmission link | 4 bits | 0 to 15 | Enumerated value |
| Radio frame type indication of a late transmission link | 4 bits | 0 to 15 | Enumerated value |
| ... | ... | ... | ... |
| Logical link identifier of the first transmission link | 24 bits | 0 to (2^24-1) | Numeric value |
| Logical link identifier of the late transmission link | 24 bits | 0 to (2^24-1) | Numeric value |
| Bandwidth indication of the first transmission link | 2 bits | 0 to 3 | Enumerated value |
| Bandwidth indication of the late transmission link | 2 bits | 0 to 3 | Enumerated value |
| Pilot density indication of the first transmission link | 2 bits | 0 to 3 | Enumerated value |
| Pilot density indication of the late transmission link | 2 bits | 0 to 3 | Enumerated value |
| Maximum number of first transmission link protocol data units | 11 bits | 0 to 2047 | Byte |
| Maximum number of late transmission link protocol data units | 11 bits | 0 to 2047 | Byte |
| Maximum time offset of the first transmission link | 9 bits | (0-511)+1 | Basic slot |
| Maximum time offset of the late transmission link | 9 bits | (0-511)+1 | Basic slot |
| ... | ... | ... | ... |
| Encryption algorithm indication (optional) | 8 bits | 0 to 255 | Numeric value |
| Integrity protection algorithm indication (optional) | 8 bits | 0 to 255 | Numeric value |
| Encryption key indication (optional) | 128 bits | 0-(2^128-1) | Numeric value |
| Integrity protection key indication (optional) | 128 bits | 0-(2^128-1) | Numeric value |
| First indication (optional) | 8 bits | 0 to 255 | Numeric value |
| Initialization base value (optional) | 64 bits | 0-(2^64-1) | Numeric value |
| ... | ... | ... | ... |

**Table 3 Field name and signaling description of the asynchronous TT link establishment indication**

| Field name | Signaling description |
|---|---|
| ... | ... |
| GT/TG mode indication | Indicates whether a signaling receiver sends data first or sends data later in an event. 0: first transmission; and 1: late transmission. |
| Radio frame type indication of a first transmission link | Indicates a radio frame type of the first transmission link. |
| Radio frame type indication of a late transmission link | Indicates a radio frame type of the late transmission link. |
| ... | ... |
| Logical link identifier of the first transmission link | Logical link identifier of the first transmission link |
| Logical link identifier of the late transmission link | Logical link identifier of the late transmission link |
| Bandwidth indication of the first transmission link | 0: 1 MHz |
| | 1: 2 MHz |
| | 2: 4 MHz |
| | 3: reserved |
| Bandwidth indication of the late transmission link | 0: 1 MHz |
| | 1: 2 MHz |
| | 2: 4 MHz |
| | 3: reserved |
| Pilot density indication of the first transmission link | 0: 4:1 |
| | 1: 8:1 |
| | 2: 16:1 |
| | 3: no pilot |
| Pilot density indication of the late transmission link | 0: 4:1 |
| | 1: 8:1 |
| | 2: 16:1 |
| | 3: no pilot |
| Maximum number of first transmission link protocol data units | Indicates a maximum number of the first transmission link protocol data units. |
| Maximum number of late transmission link protocol data units | Indicates a maximum number of the late transmission link protocol data units. |
| Maximum time offset of the first transmission link | Indicates maximum duration for sending radio frames on the first transmission link (including an interval between sending and receiving). The unit is a basic slot. |
| Maximum time offset of the late transmission link | Indicates maximum duration for sending radio frames on the late transmission link (including an interval between sending and receiving). The unit is a basic slot. |
| ... | ... |
| Encryption algorithm indication (optional) | Indicates an encryption algorithm used by a TT link. |
| Integrity protection algorithm indication (optional) | Indicates an integrity protection algorithm used by the TT link. |
| Encryption key indication (optional) | Indicates a key used by an encryption algorithm. |
| Integrity protection key indication (optional) | Indicates a key used by an integrity protection algorithm. |
| First indication (optional) | 0: Both encryption and integrity protection are enabled. |
| | 1: Encryption is disabled, and integrity protection is enabled. |
| | 2: Encryption is enabled, and integrity protection is disabled. |
| | 3: Encryption and integrity protection are disabled. |
| | 4 to 255: reserved |
| Initialization base value (optional) | Indicates an initialization base value used by a security algorithm. |

In still another possible implementation, the first node sends a first message to the second node, where the first message indicates the second node to establish a link with the third node. However, the first information is not carried in the first message, but is indicated by an additional message, for example, carried in a third message. In some solutions, the third message is referred to as security parameter information.

In some implementations, the first node further sends a first indication to the second node. The first indication is carried in a first field, and a value of the first field may indicate enabling statuses of encryption and integrity protection for the link between the second node and the third node. For example, with reference to Table 3, the first indication is indicated by an 8-bit field. When the first field is a first value (for example, 0), it indicates that both encryption and integrity protection for the link between the second node and the third node are enabled. When the first field is a second value (for example, 1), it indicates that encryption for the link between the second node and the third node is disabled and integrity protection for the link between the second node and the third node is enabled. When the first field is a third value (for example, 2), it indicates that encryption for the link between the second node and the third node is enabled and integrity protection for the link between the second node and the third node is disabled. When the first field is a fourth value (for example, 3), it indicates that neither encryption nor integrity protection for the link between the second node and the third node is enabled In some scenarios, the first indication may be referred to as an encryption and integrity protection indication. Further, the first indication may include two indications, to respectively indicate an enabling status of encryption and an enabling status of integrity protection.

In some implementations, the first indication is included in the first information. In still some implementations, the first indication may be carried in the first message, and the first field is a field in the first message. Alternatively, optionally, the first indication may be carried in the third message, and the first field is a field in the third message. Certainly, the first indication may be carried in another message and sent to the second node. For example, the first indication is carried in a fifth message for sending, and the fifth message is different from the first message and the third message.

In some implementations, the first node further sends a second indication to the second node, and the second indication indicates the second node to send data first or send data later. For example, the second indication is carried in a second field, and a value of the second field may indicate the second node to send data first or send data later. A node that performs data transmission first in the event is a first transmission node, and similarly, a node that performs data transmission later in the event is a late transmission node.

Optionally, the second indication may be carried in the first message, and the second field is a field in the first message. Alternatively, optionally, the second indication may be carried in the third message, and the second field is a field in the third message.

Step S503: The first node sends the first information to the third node.

Correspondingly, the third node receives the first information from the first node.

The first information is used to perform security protection on data transmitted between the second node and the third node. The first node is connected to the third node. With reference to FIG. 5, a communication link is established between the first node and the third node. For example, the first node is a G node, the third node is a T node, and a G-T link is established between the first node and the third node. Further, the third node is managed by the first node.

In a possible implementation, the first information is carried in (that is, included in) a second message and sent to the third node. The second message indicates the third node to establish a link with the second node. For related descriptions, refer to the foregoing descriptions of the second message. In some solutions, the first message is also referred to as an asynchronous TT link establishment indication.

In still another possible implementation, the first node sends a second message to the third node, where the second message indicates the third node to establish a link with the second node. However, the first information is not carried in the second message, but is indicated by an additional message, for example, carried in a fourth message. In some solutions, the fourth message is referred to as security parameter information.

In some implementations, the first node further sends a first indication to the third node, where the first indication is carried in a first field, and a value of the first field may indicate enabling statuses of encryption and integrity protection for the link between the second node and the third node. Optionally, the first indication is included in the first information. Optionally, the first indication may be carried in the second message, and the first field is a field in the second message. Alternatively, optionally, the first indication may be carried in the fourth message, and the first field is a field in the fourth message.

In some implementations, the first node further sends a third indication to the third node, and the third indication indicates the third node to send data first or send data later. For example, the third indication is carried in a third field, and a value of the third field may indicate the third node to send data first or send data later.

Optionally, the third indication may be carried in the second message, and the third field is a field in the second message. Alternatively, optionally, the third indication may be carried in the fourth message, and the third field is a field in the fourth message.

Step S504: The second node performs security protection on first data based on the first information.

The first data is data transmitted between the second node and the third node, and security protection includes encryption and/or integrity protection, and the like. The following describes several possible implementations.

Implementation 1: The second node performs integrity protection on the first data based on the first integrity protection algorithm and an integrity protection key. Optionally, the first integrity protection algorithm and the integrity protection key may be indicated by information in the first information. For example, the first information includes the integrity protection algorithm indication and the integrity protection key indication, the integrity protection algorithm indication indicates the first integrity protection algorithm, and the integrity protection key indication indicates the integrity protection key. Alternatively, optionally, the first integrity protection algorithm or the integrity protection key may be obtained through negotiation between the second node and the third node.

For example, the first data is data sent by the second node to the third node. The second node obtains an integrity check code through calculation based on the first integrity protection algorithm and the integrity protection key, and sends the integrity check code and the first data to the third node. The third node may check integrity of the first data based on the integrity check code.

For example, the first data is data sent by the third node to the second node. The third node obtains an integrity check code through calculation based on the first integrity protection algorithm and the integrity protection key, and sends the integrity check code and the first data to the second node. The second node may calculate a check code based on the first integrity protection algorithm and the integrity protection key, and check integrity of the first data based on the check code and the integrity check code.

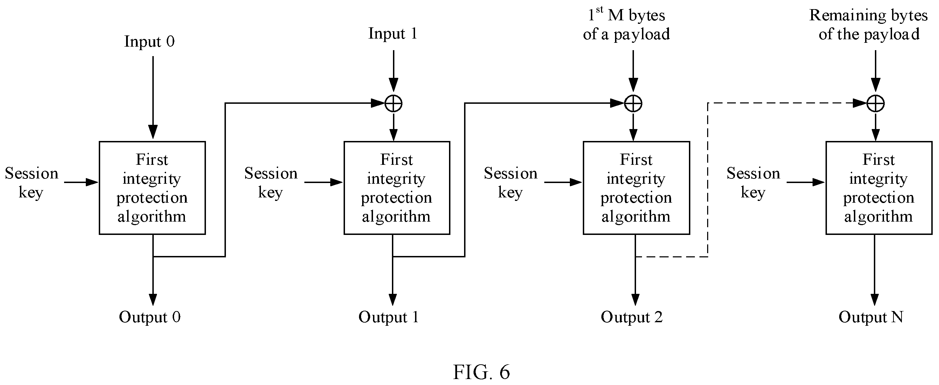

The following uses a second node side as an example to describe an integrity protection process. The second node obtains an integrity check code through calculation based on the first integrity protection algorithm, the integrity protection key, a first integrity protection input, and the first data. In an example of the integrity protection process, the first data is a payload of a transmitted data packet or the first data carries a payload of a transmitted data packet. With reference to FIG. 6, in a first calculation process, a first output (that is, an output 0 shown in FIG. 6) is obtained based on the first integrity protection algorithm, the session key, and the first integrity protection input (that is, an input 0 shown in FIG. 6). In a second calculation process, a second output (that is, an output 1 shown in FIG. 6) is obtained based on the first integrity protection algorithm, the session key, the first output, and a second integrity protection input (that is, an input 1 shown in FIG. 6). "⊕" indicates an exclusive OR operation. In a third calculation process, an integrity protection output of a 1^{st} byte corresponding to the payload is obtained based on the first integrity protection algorithm, the session key, the second output, and 1^{st} M bytes of the payload of the transmitted data packet, where M is an integer and M≥1, for example, M is 16, or 32.

When the payload of the transmitted data packet is less than or equal to M bytes, the integrity protection output of the 1^{st} byte corresponding to the payload is a final output (that is, an output 2 shown in FIG. 6). When the payload of the transmitted data packet is greater than M bytes, the third calculation process is performed a plurality of times. In an i^{th} calculation process, an integrity protection output of i^{th} M bytes corresponding to the payload is obtained based on the first integrity protection algorithm, the session key, and an integrity protection output of (i-1)^{th} M bytes corresponding to the payload, and an integrity protection output of a last part of bytes corresponding to the payload is used as a final output, where i is an integer and i is an integer from 1 to $\left⌈\frac{Quantity of bytes of the payload}{M}\right⌉$.The integrity check code can be obtained based on the final output. It should be understood that, when i is $\left⌈\frac{Quantity of bytes of the payload}{M}\right⌉$, the i^{th} M bytes are the last part of bytes of the payload, and an actual quantity of bytes of the i^{th} M bytes may be M or may be less than M.

Optionally, obtaining the integrity check code based on the final output includes: using the least significant X bits in the final output as the integrity check code. As shown in FIG. 6, a dashed line indicates that cyclic calculation is performed on remaining bytes until bytes of the payload are calculated completely, and an output N is the integrity protection output of the last part of bytes corresponding to the payload, and the least significant X bits in the output N are used as the integrity check code. For example, the least significant 4 bytes in the output N are used as the integrity check code.

Optionally, the session key includes an integrity protection key, an encryption key, an authentication encryption key, or the like. In some solutions, in a process of obtaining the integrity check code, the session key may be replaced with the integrity protection key.

In some possible implementations, the first integrity protection input (that is, the input 0 shown in FIG. 6) includes a direction indication, a second parameter, or the like. The direction indication indicates a sequence in which a transmitter and a receiver of the first data perform data transmission in an event. For example, when the direction indication is a fifth value, it indicates that a first transmission node performs sending and a late transmission node performs receiving. When the direction indication is a sixth value, it indicates that a late transmission node performs sending and a first transmission node performs receiving. The first transmission node is a node that performs data transmission first in the event, and the late transmission node is a node that performs data transmission later in the event.

The second parameter is a parameter participating in the security algorithm, and may optionally be a random number or a parameter obtained through processing based on a random number. In some solutions, the second parameter is referred to as an initialization vector.

In an implementation, the second parameter is related to the foregoing first parameter, and optionally, the first parameter is provided by the first node for the second node. For example, the first parameter is an initialization base value of A bits, and processing (for example, exclusive OR or exclusive NOR processing) is performed on the initialization base value based on another bit sequence (for example, B bits), to obtain a final value as the second parameter, where A and B are integers greater than or equal to 1. Optionally, the bit sequence of the B bits may be related to a type of a radio frame. Optionally, the type of the radio frame is a type of a radio frame sent by the second node, or a type of a radio frame sent by the third node. For example, the second parameter occupies 64 bits, where the initialization base value is a 64-bit value generated by using a random number generator, and for a type 1 radio frame and a type 2 radio frame, the second parameter is a final value (64 bits) obtained by performing an exclusive OR operation on the least significant 32 bits of the initialization base value and the least significant 32 bits of a synchronization sequence. For a type 3 radio frame and a type 4 radio frame, the second parameter is a final value obtained by performing an exclusive OR operation on the least significant 24 bits of the initialization base value and 24 bits of a logical link identifier.

In still another implementation, the second parameter is related to a third parameter from the second node and/or a fourth parameter from the third node. For example, the second node provides the third parameter, the third node provides the fourth parameter, and the second node obtains the second parameter based on the third parameter and the fourth parameter. For example, the second node sends the third parameter (for example, 32 bits) to the third node, and the third node sends the fourth parameter (32 bits) to the second node. The second parameter is a 64-bit value obtained by splicing the third parameter and the fourth parameter.

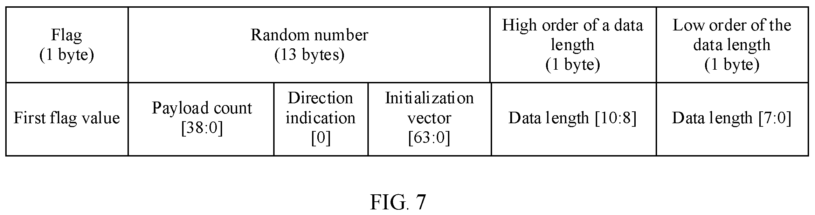

Optionally, the first integrity protection input further includes other information, for example, one or more of a flag bit, a payload count, or a data length. For ease of understanding, the following describes possible content included in a first integrity protection input with reference to FIG. 7. The first integrity protection input includes a flag (1 byte), a random number (13 bytes), a high order of a data length (1 byte), and a low order of the data length (1 byte). For example, a value of the flag may be a first flag value, and the first flag value may be predefined or self-defined, for example, is defined by one node in the first node, the second node, or the third node, or is obtained through negotiation by a plurality of nodes. For example, the first flag value is 0x49. The random number includes a payload count, a direction indication, and an initialization vector, where the payload count occupies 39 bits, and is an accumulated number of payloads of transmitted data packets. The direction indication occupies 1 bit. 1 indicates that the first transmission node performs sending and the late transmission node performs receiving. 0 indicates that the first transmission node performs receiving and the late transmission node performs sending. The initialization vector (which may be considered as the second parameter) occupies 64 bits. A determining manner of the initialization vector is: first generating a 64-bit initialization base value by using the random number generator (the base value may be a first parameter, and may be optionally generated by the first node, the second node, or the third node); for a type 1 radio frame and a type 2 radio frame, performing an exclusive OR operation on the least significant 32 bits of the initialization base value and the least significant 32 bits of a synchronization sequence to obtain a final value (64 bits); and for a type 3 radio frame and a type 4 radio frame, performing an exclusive OR operation on the least significant 24 bits of the initialization base value and 24 bits of a logical link identifier to obtain a final value. The data length occupies 11 bits, and indicates a quantity of bytes occupied by the payload. A high-order byte of the data length occupies 3 bits, and is a value of the most significant 3 bits of the 11-bit data length. A low-order byte of the data length occupies 8 bits, and is a value of the least significant 8 bits of the 11-bit data length. Values of remaining 5 bits at the high order of the data length are 0s.

Implementation 2: The second node encrypts/decrypts the first data based on the first encryption algorithm and an encryption key. For example, for data sent by the second node to the third node, the second node encrypts the first data based on the first encryption algorithm and the encryption key for sending. For data sent by the third node to the second node, the second node decrypts encrypted first data based on the first encryption algorithm and the encryption key, to obtain a plaintext of the first data. Optionally, the first encryption algorithm and the encryption key may be indicated by information in the first information. For example, the first information includes the encryption algorithm indication and the encryption key indication, the encryption algorithm indication indicates the first encryption algorithm, and the encryption key indication indicates the encryption key. Alternatively, optionally, the first encryption algorithm or the encryption key may be obtained through negotiation between the second node and the third node.

The following describes an encryption process by using an example in which the second node performs encryption.

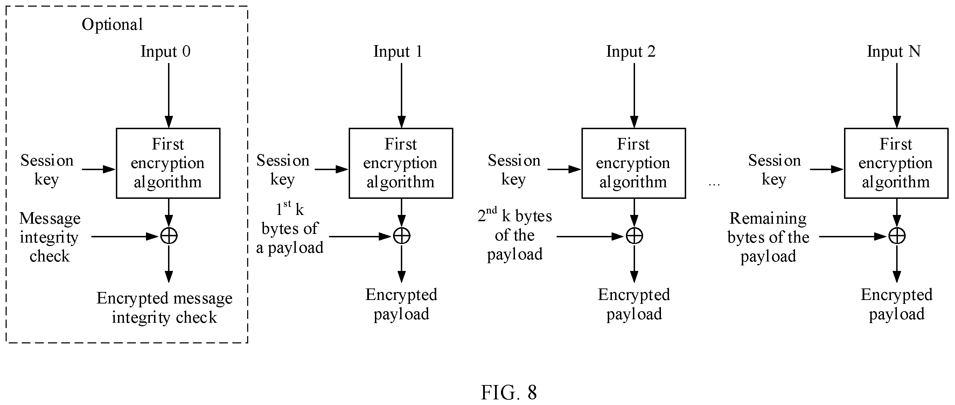

In some implementations, the second node may encrypt the first data based on the first encryption algorithm, the encryption key, and an encryption input. The encryption input includes the direction indication and/or the second parameter. In an example of the encryption process, the first data is a payload of a transmitted data packet or the first data carries a payload of a transmitted data packet. With reference to FIG. 8, for all bytes of the payload, a j^{th} encryption output is obtained based on the first encryption algorithm, the session key, j^{th} K bytes of the payload, and an encryption input corresponding to the j^{th} K bytes, where j is an integer and j is an integer from 1 to $\left⌈\frac{Quantity of bytes of the payload}{k}\right⌉$. K is an integer and K≥1, for example, K is 16, or 32. Optionally, K=M.For example, for 1^{st} K bytes of the payload, an output is obtained based on an input 1, the session key, and the first encryption algorithm, and an exclusive OR (represented by "⊕") is performed on the output and the 1^{st} K bytes of the payload, to obtain an encrypted payload. Similarly, for 2^{nd} K bytes of the payload, an output is obtained based on an input 2, the session key, and the first encryption algorithm, and an exclusive OR (represented by "⊕") is performed on the output and the 2^{nd} K bytes of the payload, to obtain an encrypted payload. The rest may be deduced by analogy until remaining bytes of the payload are encrypted. It should be understood that, when j is $\left⌈\frac{Quantity of bytes of the payload}{k}\right⌉$, the j^{th} K bytes are a last part of bytes of the payload, and an actual quantity of bytes of the j^{th} K bytes may be K or may be less than K.

In some possible implementations, when integrity protection between the second node and the third node is enabled, an encrypted integrity check code is obtained based on the first encryption algorithm, the session key, the integrity check code, and an encryption input (an input 0 shown in FIG. 8) corresponding to the integrity check code.

Optionally, the session key includes an integrity protection key, an encryption key, an authentication encryption key, or the like. In some solutions, in the encryption process, the session key may be replaced with the encryption key. Further, the encryption key and the integrity protection key may be the same, that is, the session key participating in the encryption process and the session key participating in the integrity protection process may be the same, and certainly may also be different.

In some possible implementations, the encryption input (the input 0, an input 1, an input 2, or the like shown in FIG. 8) in the encryption process may include a direction indication and/or a second parameter, and optionally further include other information, for example, one or more of a flag bit, a payload count, or a processing number count. For detailed descriptions of the direction indication and the second parameter, refer to Implementation 1.

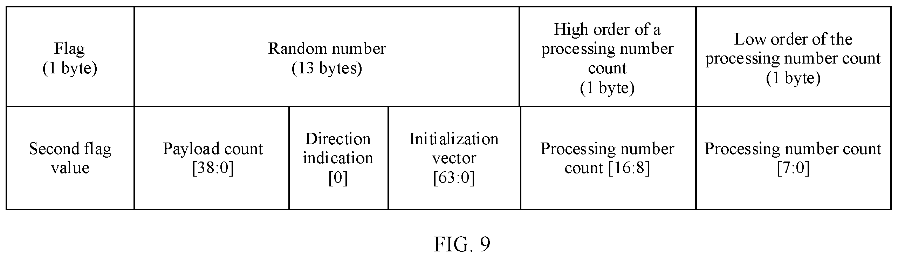

For ease of understanding, the following describes possible content included in an encryption input with reference to FIG. 9. The encryption input includes a flag (1 byte), a random number (13 bytes), a high order of a processing number count (1 byte), and a low order of a processing number count (1 byte). A value of the flag may be a second flag value, and the second flag value may be predefined or self-defined, for example, is defined by one node in the first node, the second node, or the third node, or is obtained through negotiation by a plurality of nodes. For example, the second flag value is 0x01. The random number includes a payload count, a direction indication, and an initialization vector, where the payload count occupies 39 bits, and is an accumulated number of payloads of transmitted data packets. The direction indication occupies 1 bit. 1 indicates that the first transmission node performs sending and the late transmission node performs receiving. 0 indicates that the first transmission node performs receiving and the late transmission node performs sending. Optionally, the direction indication may be ignored in a scenario of one-way sending or receiving. The initialization vector occupies 64 bits, and a determining manner of the initialization vector is: first generating a 64-bit initialization base value by using the random number generator (the base value may be a first parameter, and may be optionally generated by the first node, the second node, or the third node); for a type 1 radio frame and a type 2 radio frame, performing an exclusive OR operation on the least significant 32 bits of the initialization base value and the least significant 32 bits of a synchronization sequence to obtain a final value (64 bits); and for a type 3 radio frame and a type 4 radio frame, performing an exclusive OR operation on the least significant 24 bits of the initialization base value and 24 bits of a logical link identifier to obtain a final value. The processing number count may indicate a count of times of performing encryption processing. FIG. 8 is used as an example. A processing number count corresponding to the input 0 is 0, and a processing number count corresponding to the input 1 is 1. By analogy, a processing number count corresponding to an input N is N. A high-order byte of the processing number count occupies 8 bits, and is a value of the most significant 8 bits of the 16-bit processing number count; and a low-order byte of the processing number count occupies 8 bits, and is a value of the least significant 8 bits of the 16-bit processing number count.

It should be understood that the encryption process and the integrity protection process may be combined. In an example implementation, when both encryption and integrity protection between the second node and the third node are enabled, the second node performs integrity protection on the first data, and encrypts the integrity check code and the first data. In still another example implementation, when encryption between the second node and the third node is enabled but integrity protection between the second node and the third node is disabled, the second node encrypts the first data. In still another example implementation, when encryption between the second node and the third node is disabled but integrity protection between the second node and the third node is enabled, the second node performs integrity protection on the first data.

In some possible implementations, the second node may establish a link with the third node, and the first data may be transmitted over the link between the second node and the third node. For example, the second node may receive a first message, where the first message includes configuration information of the link, and the second node establishes the communication link with the third node based on the configuration information of the link. Further, the second node and the third node perform encryption and/or integrity protection on the link between the second node and the third node based on a security parameter (that is, a security algorithm, a security key, a parameter participating in the security algorithm, and the like), and therefore encryption and/or integrity protection may be performed on data transmitted over the link based on the security parameter.

In the embodiment shown in FIG. 5, the second node and the third node are two nodes managed by the first node, and the first node may generate the first information for the second node and the third node, so that both the second node and the third node may perform security protection on a data transmission process between the second node and the third node based on the first information provided by the first node. On one hand, this application implements data transmission between two nodes managed by another node, thereby improving data transmission efficiency. On the other hand, security protection may be performed on the data communicated between the two nodes based on the information generated and distributed by the first node, thereby improving communication security.

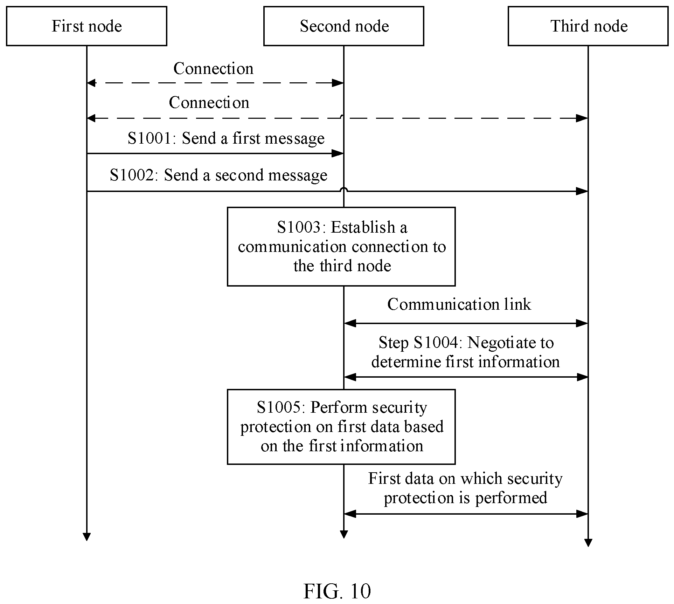

FIG. 10 is a schematic flowchart of still another communication method according to an embodiment of this application. Optionally, the method may be applied to a communication system, for example, one or more communication systems in FIG. 1 to FIG. 4. The communication method shown in FIG. 10 may include one or more steps in step S1001 and/or step S1005. It should be understood that, herein, for ease of description, a sequence of step S1001 to step S1005 is used for description, but this is not intended to limit execution to the foregoing sequence. An execution order, execution time, a quantity of execution times, and the like of the foregoing one or more steps are not limited in embodiments of this application. Step S1001 to step S1005 are specifically as follows.

Step S1001: A first node sends a first message to a second node.

Correspondingly, the second node receives the first message from the first node.

The first message indicates the second node to establish a link with a third node. For example, the first message has a specific format or carries special information, to indicate the second node to establish the link with the third node. For example, the first message carries configuration information of the link, and the second node may establish the link with the third node based on the configuration information of the link. In some solutions, the first message is also referred to as an asynchronous TT link establishment indication, to indicate to establish a TT link (or referred to as a T-T link) between the second node and the third node, where the T-T link is a link between T nodes. Certainly, a name of the message is not strictly limited in this application. In specific implementation, the name of the message, a name of the information, and a name of the parameter may be randomly replaced.

Refer to Table 2 and Table 3. Table 2 and Table 3 are diagrams of a message format of an asynchronous TT link establishment indication according to an embodiment of this application. The asynchronous TT link establishment indication includes the configuration information of the link, for example, a GT/TG mode indication, a radio frame type indication, a logical link identifier, a bandwidth indication, a pilot density indication, a maximum number of protocol data units, or a maximum time offset. For details, refer to Table 2. Details are not described herein again. In this way, the second node may configure the link with the third node based on the configuration information of the link.

Step S1002: The first node sends a second message to the third node.

Correspondingly, the third node receives the second message from the first node.

The second message indicates the third node to establish a link with the second node.

Step S1003: The second node establishes a communication connection to the third node.

Step S1004: The second node negotiates with the third node to determine first information.

The first information includes one or more of the following information: an integrity protection algorithm indication, an integrity protection key indication, an encryption algorithm indication, an encryption key indication, or a first parameter.

Step S1005: The second node performs security protection on first data based on the first information.

For example, the second node and the third node perform encryption and/or integrity protection on the link between the second node and the third node based on a security parameter (that is, a security algorithm, a security key, a parameter participating in the security algorithm, and the like), and encryption and/or integrity protection may be performed on data transmitted over the link based on the security parameter.

For a specific security protection process, refer to the descriptions in step S504.

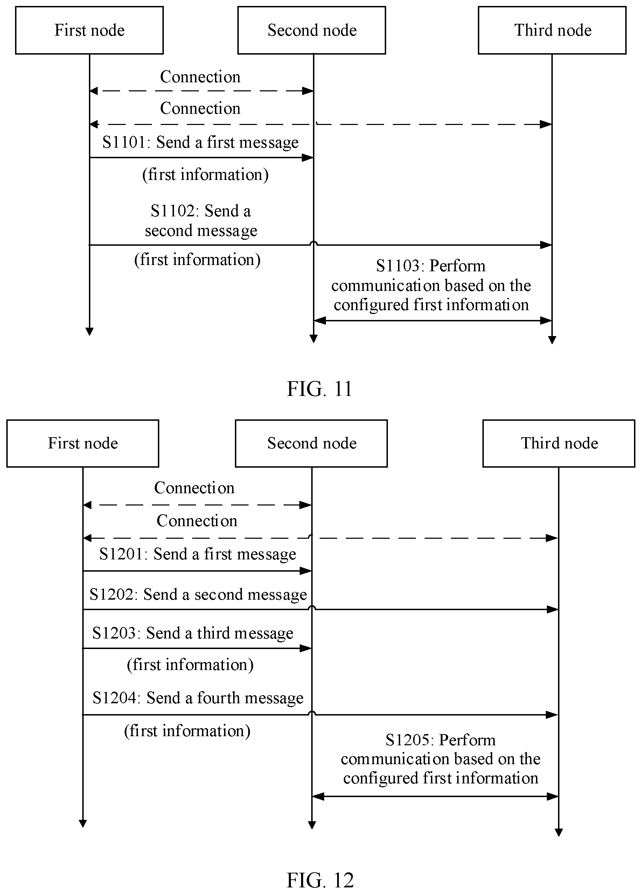

The foregoing embodiments shown in FIG. 5 and FIG. 10 provide a plurality of possible solutions. The following continues to describe a part of possible designs of embodiments with reference to FIG. 11, FIG. 12, FIG. 13, or FIG. 14. It should be understood that, for logic, terms, and the like in embodiments shown in FIG. 11, FIG. 12, FIG. 13, or FIG. 14, refer to the foregoing descriptions. In addition, in a part of figures of this application, information indicated by the message is described in the accompanying drawings by using brackets. However, this does not represent a strict limitation on message content.

FIG. 11 is a schematic flowchart of still another communication method according to an embodiment of this application. Optionally, the method is applied to the foregoing communication system. The communication method shown in FIG. 11 may include one or more steps in step S1101 and/or step S1103. Step S1101 to step S1103 are specifically as follows.

Step S1101: A first node sends a first message to a second node.

A communication connection is established between the first node and the second node, for example, a G-T link is established.

The first message indicates the second node to establish a link with a third node. For example, the first message is a TT link establishment indication. In some solutions, the first message may also be referred to as an asynchronous TT link establishment indication.

The first message includes first information. For example, the first information includes one or more of the following information: an integrity protection algorithm indication, an integrity protection key indication, an encryption algorithm indication, an encryption key indication, a first parameter, or the like. The first information may be generated by the first node.

Further, the first message further includes configuration information of the link, for example, a GT/TG mode indication, a radio frame type indication, a logical link identifier, a bandwidth indication, a pilot density indication, a maximum number of protocol data units, or a maximum time offset. For details, refer to Table 2. In this way, the second node may establish and configure the link with the third node based on the configuration information of the link.

Step S1102: The first node sends a second message to the third node.

A communication connection is established between the first node and the third node, for example, a G-T link is established.

The second message indicates the second node to establish a link with the third node. For example, the second message is a TT link establishment indication. In some solutions, the second message may also be referred to as an asynchronous TT link establishment indication. The second message includes first information. For example, the first information includes one or more of the following information: an integrity protection algorithm indication, an integrity protection key indication, an encryption algorithm indication, an encryption key indication, a first parameter, or the like.

Further, the second message further includes configuration information of the link, and the third node may establish and configure the link with the second node based on the configuration information of the link.

Step S1103: The second node communicates with the third node based on the configured first information.

For example, the second node and the third node perform, based on the configured first information, security protection on data transmitted between the second node and the third node. For details, refer to step S504.

In the embodiment shown in FIG. 11, the second node and the third node may be indicated by the first node to establish a point-to-point link between the second node and the third node. The first information may be carried in the first message, so that a quantity of pieces of signaling in a link establishment process can be reduced, and transmission efficiency can be improved.

FIG. 12 is a schematic flowchart of still another communication method according to an embodiment of this application. Optionally, the method is applied to the foregoing communication system. The communication method shown in FIG. 12 may include one or more steps in step S1201 and/or step S1205. Step S1201 to step S1205 are specifically as follows.

Step S1201: A first node sends a first message to a second node.

A communication connection is established between the first node and the second node, for example, a G-T link is established.

The first message indicates the second node to establish a link with a third node. For example, the first message is a TT link establishment indication. In some solutions, the first message may also be referred to as an asynchronous TT link establishment indication. For example, the first message further includes configuration information of the link, for example, a GT/TG mode indication, a radio frame type indication, a logical link identifier, a bandwidth indication, a pilot density indication, a maximum number of protocol data units, or a maximum time offset. For details, refer to Table 2. In this way, the second node may establish and configure the link with the third node based on the configuration information of the link.

Step S1202: The first node sends a second message to the third node.

A communication connection is established between the first node and the third node, for example, a G-T link is established.

The second message indicates the second node to establish a link with the third node. For example, the second message is a TT link establishment indication. In some solutions, the second message may also be referred to as an asynchronous TT link establishment indication. Further, the second message further includes configuration information of the link, and the third node may establish and configure the link with the second node based on the configuration information of the link.

Step S1203: The first node sends a third message to the second node.

The third message includes first information. For example, the first information includes an encryption algorithm indication, an integrity protection algorithm indication, an encryption key indication, an integrity protection key indication, a first indication, and a first parameter. The first information may be generated by the first node.

For details, refer to the foregoing descriptions. For example, the third message may be referred to as security parameter indication information.

Step S1204: The first node sends a fourth message to the third node.

The fourth message includes first information. For example, the first information includes an encryption algorithm indication, an integrity protection algorithm indication, an encryption key indication, an integrity protection key indication, a first indication, and a first parameter. For details, refer to the foregoing descriptions. For example, the fourth message may be referred to as security parameter indication information.

Step S1205: The second node communicates with the third node based on the configured first information.

For example, the second node and the third node perform encryption and/or integrity protection on the link between the second node and the third node based on a configured security parameter (that is, a security algorithm, a security key, a parameter participating in the security algorithm, and the like), and encryption and/or integrity protection may be performed on data transmitted over the link based on the security parameter. For a specific process, refer to the descriptions in step S504.

In the embodiment shown in FIG. 12, the first node sends the first message to the second node to indicate the second node to establish the communication link with the third node, and sends the first information to the second node through an additional message (for example, the third message), so that a function of the message is more detailed and refined, and reusability and combination flexibility of a message format are improved.

For example, in some solutions, the first node may also indicate another G node to establish a G-T link (or a G-G link) with another node. In this case, the first node may send a G-T link establishment indication (or a G-G link establishment indication) to the G node. Because the G node may configure a security-related parameter, and the first node does not need to send the security-related parameter to the G node, a field related to the first information does not need to be set in the G-T link establishment indication (or the G-G link establishment indication). In the foregoing embodiment, the security-related parameter is indicated by the additional third message and the additional fourth message, to refine a signaling function, so that the TT link establishment indication and the G-T link establishment indication may use a same message format, thereby improving reusability and combination flexibility of the message format.

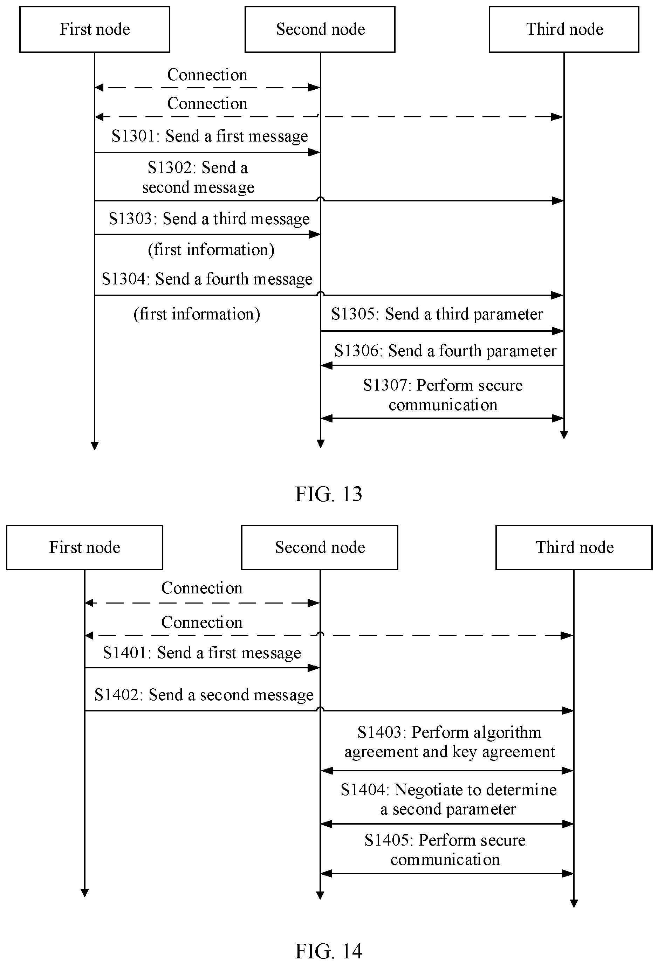

FIG. 13 is a schematic flowchart of still another communication method according to an embodiment of this application. Optionally, the method is applied to the foregoing communication system. The communication method shown in FIG. 13 may include one or more steps in step S1301 and/or step S1307. Step S1301 to step S1307 are specifically as follows.

Step S1301: A first node sends a first message to a second node.

A communication connection is established between the first node and the second node, for example, a G-T link is established.

The first message indicates the second node to establish a link with a third node. For example, the first message is a TT link establishment indication. In some solutions, the first message may also be referred to as an asynchronous TT link establishment indication. For example, the first message further includes configuration information of the link, for example, a GT/TG mode indication, a radio frame type indication, a logical link identifier, a bandwidth indication, a pilot density indication, a maximum number of protocol data units, or a maximum time offset. For details, refer to Table 2. In this way, the second node may establish and configure the link with the third node based on the configuration information of the link.

Optionally, the first message may include a first indication.

Step S1302: The first node sends a second message to the third node.

A communication connection is established between the first node and the third node, for example, a G-T link is established.

The second message indicates the second node to establish a link with the third node. For example, the second message is a TT link establishment indication. In some solutions, the second message may also be referred to as an asynchronous TT link establishment indication. Further, the second message further includes configuration information of the link, and the third node may establish and configure the link with the second node based on the configuration information of the link.

Optionally, the second message may include a first indication.

Step S1303: The first node sends a third message to the second node.

The third message includes first information. For example, the first information includes an encryption algorithm indication, an integrity protection algorithm indication, an encryption key indication, and an integrity protection key indication. The first information may be generated by the first node. For example, the third message may be referred to as security parameter indication information.

Step S1304: The first node sends a fourth message to the third node.

The fourth message includes first information. For example, the first information includes an encryption algorithm indication, an integrity protection algorithm indication, an encryption key indication, and an integrity protection key indication. For example, the fourth message may be referred to as security parameter indication information.

Step S1305: The second node sends a third parameter to the third node.

For example, the third parameter may be referred to as an initialization vector of the second node, for example, 32 bits.

Step S1306: The third node sends a fourth parameter to the second node.

For example, the fourth parameter may be referred to as an initialization vector of the third node, for example, 32 bits.

Step S1307: The second node performs secure communication with the third node.

A second parameter used in a security protection process is determined based on the third parameter and the fourth parameter. For example, the second parameter is 64 bits, and the second parameter=the third parameter+the fourth parameter, where + represents concatenation of bits.

It can be learned that the second node and the third node may perform, based on the configured first information and the second parameter obtained through negotiation, security protection on data transmitted between the second node and the third node. In some solutions, the second node and the third node perform encryption and/or integrity protection on the link between the second node and the third node based on a security parameter (that is, a security algorithm, a security key, a parameter participating in the security algorithm, and the like), and encryption and/or integrity protection may be performed on data transmitted over the link based on the security parameter.

For a specific process, refer to the descriptions in step S504.

In the embodiment shown in FIG. 13, the first node sends the first message to the second node to indicate the second node to establish the communication link with the third node, and sends the first information to the second node through an additional message (for example, the third message), so that a function of the message is more detailed and refined, and reusability and combination flexibility of a message format are improved. In addition, the second node and the third node determine, through negotiation, the parameter (for example, the second parameter) participating in the security algorithm, so that security of communication between the second node and the third node is further improved.

FIG. 14 is a schematic flowchart of still another communication method according to an embodiment of this application. Optionally, the method is applied to the foregoing communication system. The communication method shown in FIG. 14 may include one or more steps in step S1401 and/or step S1405. Step S1401 to step S1405 are specifically as follows.

Step S1401: A first node sends a first message to a second node.

A communication connection is established between the first node and the second node, for example, a G-T link is established.

The first message indicates the second node to establish a link with a third node. For example, the first message is a TT link establishment indication. In some solutions, the first message may also be referred to as an asynchronous TT link establishment indication. For example, the first message further includes configuration information of the link, for example, a GT/TG mode indication, a radio frame type indication, a logical link identifier, a bandwidth indication, a pilot density indication, a maximum number of protocol data units, or a maximum time offset. For details, refer to Table 2. In this way, the second node may establish and configure the link with the third node based on the configuration information of the link.

Step S1402: The first node sends a second message to the third node.

A communication connection is established between the first node and the third node, for example, a G-T link is established.

The second message indicates the second node to establish a link with the third node. For example, the second message is a TT link establishment indication. In some solutions, the second message may also be referred to as an asynchronous TT link establishment indication. Further, the second message further includes configuration information of the link, and the third node may establish and configure the link with the second node based on the configuration information of the link.

Step S1403: The second node and the third node perform algorithm agreement and key agreement.

For example, the second node may indicate, to the third node, a security algorithm supported by the second node, and the third node selects an algorithm (for example, selects an algorithm with a highest priority) from security algorithms supported by the second node and the third node. Alternatively, the third node may indicate, to the second node, a security algorithm supported by the third node, and the second node selects an algorithm (for example, selects an algorithm with a highest priority) from security algorithms supported by the second node and the third node. The security algorithm includes one or more of an encryption algorithm, an integrity protection algorithm, and an authentication encryption algorithm.

The key agreement may be determined according to a DH algorithm, or may be determined based on key information. For example, a plurality of keys are set in the second node and the third node, and each key corresponds to key information. The second node sends the key information to the third node, and the third node selects a corresponding key as a session key based on the key information. The session key includes one or more of an encryption key, an integrity protection key, and an authentication encryption key.

Step S1404: The second node and the third node negotiate to determine a second parameter.

For example, the second node determines the second parameter, and provides the second parameter to the third node.

Alternatively, the third node determines the second parameter and provides the second parameter to the second node.

Alternatively, the second node determines a third parameter and provides the third parameter to the third node, and the third node determines a fourth parameter and provides the fourth parameter to the second node. The second parameter is determined based on the third parameter and the fourth parameter.

Step S1405: The second node performs secure communication with the third node.

For example, the second node and the third node perform, based on the security algorithm, the session key, and a parameter (for example, the second parameter) participating in the security algorithm that are obtained through negotiation, security protection on data transmitted between the second node and the third node. For a specific security protection process, refer to step S504.

In the embodiment shown in FIG. 14, the first node sends the first message to the second node to indicate the second node to establish the communication link with the third node, and the second node and the third node determine, through negotiation, the security algorithm, the key, and the parameter (for example, the second parameter) participating in the security algorithm, so that security of communication between the second node and the third node is further improved.

The foregoing describes in detail the method in embodiments of this application. The following provides apparatuses in embodiments of this application.

It should be understood that division of units in the apparatus provided in embodiments of this application is merely logical function division. During actual implementation, all or a part of the units may be integrated into one physical entity, or may be physically separated. In addition, a unit in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of units in the apparatus. The processor is, for example, a general-purpose processor like a central processing unit (central processing unit, CPU) or a microprocessor, and the memory is a memory inside the apparatus or a memory outside the apparatus.

Alternatively, a unit in the apparatus may be implemented in a form of a hardware circuit, and the hardware circuit may be designed to implement functions of a part or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement functions of a part or all of the units. For another example, in another implementation, the hardware circuit may be implemented by using a programmable logic device (programmable logic device, PLD). A field programmable gate array (Field Programmable Gate Array, FPGA) is used as an example. The hardware circuit may include a large quantity of logic gate circuits, and a connection relationship between the logic gate circuits is configured based on a configuration file, to implement functions of a part or all of the units.

In embodiments of this application, the units in the apparatus may be configured as one or more processors (or processing circuits) that implement the foregoing methods, for example, a CPU (graphics processing unit, GPU), a neural network processing unit (neural network processing Unit, NPU), a tensor processing unit (tensor processing unit, TPU), a deep learning processing unit (deep learning processing unit, DPU), a microprocessor (micro processor unit, MPU), a digital signal processor (digital signal processor, DSP), an ASIC, an FPGA, or a combination of at least two of these processor forms.

In addition, all or a part of the units of the foregoing apparatus may be integrated, or may be implemented independently. In an implementation, these units are integrated together, and implemented in a form of a system-on-a-chip (system-on-a-chip, or referred to as a system on chip). The SOC may include at least one processor, configured to implement any one of the foregoing methods or implement functions of units of the apparatus. Types of the at least one processor may be different. For example, the at least one processor includes a CPU and an FPGA, a CPU and an artificial intelligence processor, or a CPU and a GPU. Several possible apparatuses are listed below.

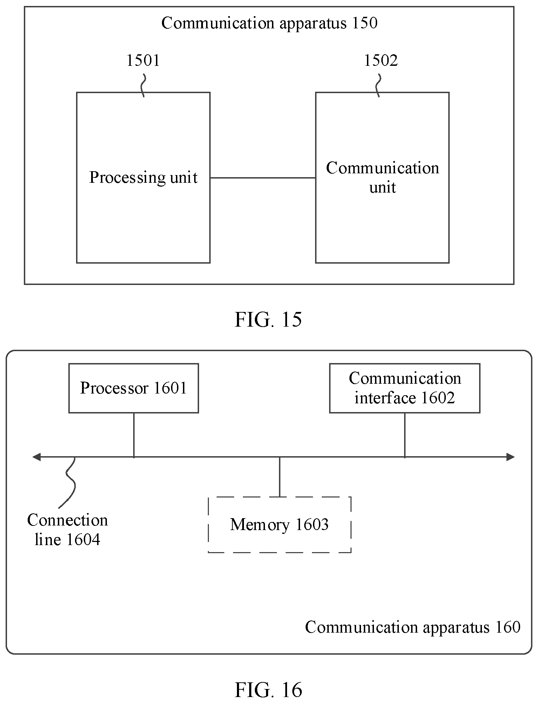

FIG. 15 is a diagram of a structure of a communication apparatus according to an embodiment of this application. Optionally, a communication apparatus 150 may be an independent device, for example, a node. Alternatively, a communication apparatus 150 may be a component, for example, a chip or an integrated circuit, in an independent device (for example, a node). The communication apparatus 150 is configured to implement the foregoing communication method, for example, the communication method shown in FIG. 5, FIG. 10, FIG. 11, FIG. 12, FIG. 13, or FIG. 14.

For example, the communication apparatus 150 includes a processing unit 1501 and a communication unit 1502. The processing unit 1501 is configured to implement one or more operations such as processing, determining, generation, calculation, encryption, and decryption. The communication unit 1502 is configured to implement one or more operations such as sending and receiving.

In a possible design, the communication apparatus is, for example, configured to perform the method performed by the first node in the foregoing communication method.

In a possible implementation, the processing unit 1501 is configured to generate first information. The communication unit 1502 is configured to send the first information to a second node, and send the first information to a third node. The first information is used to perform security protection on data transmitted between the second node and the third node. The first node is separately connected to the second node and the third node, and the second node and the third node are managed by the first node.

In still another possible implementation, the communication unit 1502 is further configured to send a first message to the second node, where the first information is carried in the first message. Optionally, the first message carries configuration information of a link, and the second node may establish the link with the third node based on the configuration information of the link.

In still another possible implementation, the communication unit 1502 is further configured to send a second message to the third node, where the first information is carried in the second message. Optionally, the second message carries configuration information of a link, and the third node may establish the link with the second node based on the configuration information of the link.

In still another possible implementation, the first information sent to the second node is carried in a third message. In other words, the communication unit 1502 is further configured to send a third message to the second node, where the third message includes the first information.

In still another possible implementation, the communication unit 1502 is further configured to send a first message to the second node. The first message indicates the second node to establish a communication link with the third node. Further, the first information is not carried in the first message.

In still another possible implementation, the communication unit 1502 is further configured to send a second message to the third node, where the second message indicates the third node to establish a communication link with the second node. Further, the first information is not carried in the second message.

In still another possible implementation, the first information sent to the third node is carried in a fourth message. In other words, the communication unit 1502 is further configured to send a fourth message to the third node, where the fourth message includes the first information.

For related descriptions, refer to the descriptions in the foregoing embodiments. Details are not described herein again.

In a possible design, the communication apparatus is, for example, configured to perform the method performed by the second node in the foregoing communication method.

In a possible implementation, the communication unit 1502 is configured to receive first information from a first node. The processing unit 1501 is configured to perform security protection on first data based on the first information, where the first data is data transmitted between a second node and a third node.

In a possible implementation, the communication unit 1502 is further configured to receive a first message from the first node, where the first information is carried in the first message. The first message indicates the second node to establish a connection to the third node.

In a possible implementation, the communication unit 1502 is further configured to receive a first message from the first node. The first message indicates the second node to establish a connection to the third node. Further, the first information is not carried in the first message.

In a possible implementation, the communication unit 1502 is further configured to receive a third message from the first node, where the first information is carried in the third message.

In a possible implementation, the processing unit 1501 and the communication unit 1502 are further configured to establish a communication link with the third node.

In a possible implementation, the processing unit 1501 is further configured to perform integrity protection on the first data based on a first integrity protection algorithm and an integrity protection key.

In a possible implementation, the processing unit 1501 is further configured to perform integrity protection on the first data based on a first integrity protection algorithm and an integrity protection key. The integrity protection key is obtained through negotiation between the second node and the third node.

In a possible implementation, the processing unit 1501 is further configured to perform integrity protection on the first data based on a first integrity protection algorithm and an integrity protection key. The first integrity protection algorithm is obtained through negotiation between the second node and the third node.

In a possible implementation, the processing unit 1501 is further configured to obtain an integrity check code through calculation based on the first integrity protection algorithm, the integrity protection key, a first integrity protection input, and the first data.

In a possible implementation, the first data is carried in a payload of a transmitted data packet. The processing unit 1501 is further configured to: obtain a first output based on the first integrity protection algorithm, the integrity protection key, and the first integrity protection input, obtain a second output based on the first integrity protection algorithm, the integrity protection key, the first output, and a second integrity protection input, and obtain, based on the first integrity protection algorithm, the integrity protection key, the second output, and 1^{st} M bytes of the payload of the transmitted data packet, an integrity protection output of a 1^{st} byte corresponding to the payload, where M is an integer, and M≥1.

When the payload of the transmitted data packet is less than or equal to M bytes, the integrity protection output of the 1^{st} byte corresponding to the payload is a final output. When the payload of the transmitted data packet is greater than M bytes, an integrity protection output of i^{th} M bytes corresponding to the payload is obtained based on the first integrity protection algorithm, the integrity protection key, and an integrity protection output of (i-1)^{th} M bytes corresponding to the payload, and an integrity protection output of a last part of bytes corresponding to the payload is used as a final output, where i is an integer and i is an integer from 1 to $\left⌈\frac{Quantity of bytes of the payload}{M}\right⌉$, and the integrity check code is obtained based on the final output. $\left⌈x\right⌉$ represents an integer obtained by rounding up x.

Optionally, obtaining the integrity check code based on the final output includes: using the least significant X bits in the final output as the integrity check code.

In a possible implementation, the processing unit 1501 is further configured to encrypt the first data based on the first encryption algorithm and an encryption key.

In a possible implementation, the processing unit 1501 is further configured to encrypt the first data based on the first encryption algorithm and an encryption key, where the encryption key is obtained through negotiation between the second node and the third node.

In a possible implementation, the processing unit 1501 is further configured to encrypt the first data based on the first encryption algorithm and an encryption key, where the first encryption algorithm is obtained through negotiation between the second node and the third node.

In a possible implementation, the processing unit 1501 is further configured to encrypt the first data based on the first encryption algorithm, the encryption key, and an encryption input. The encryption input includes the direction indication and/or the second parameter.

In a possible implementation, the first data is carried in a payload of a transmitted data packet. The processing unit 1501 is further configured to: for all bytes of the payload, obtaining a j^{th} encryption output based on the first encryption algorithm, the encryption key, j^{th} K bytes of the payload, and an encryption input corresponding to the j^{th} K bytes, where j is an integer, and j is an integer from 1 to $\left⌈\frac{Quantity of bytes of the payload}{K}\right⌉ + 1$.

In a possible implementation, when integrity protection between the second node and the third node is enabled, the processing unit 1501 is further configured to obtain an encrypted integrity check code based on the first encryption algorithm, the encryption key, the integrity check code, and an encryption input corresponding to the integrity check code.

For related descriptions, refer to the descriptions in the foregoing embodiments. Details are not described herein again.

In a possible design, the communication apparatus is, for example, configured to perform the method performed by the second node in the foregoing communication method. Specifically, the communication unit 1502 is configured to receive a first message from a first node, the processing unit 1501 and the communication unit 1502 are configured to establish a link with a third node and negotiate with the third node to determine first information, and the processing unit 1501 is configured to perform security protection on first data based on the first information. The first message indicates the second node to establish the link with the third node, and the first data is data transmitted between the second node and the third node.

In still another possible implementation, the processing unit 1501 is further configured to perform integrity protection on the first data based on a first integrity protection algorithm and an integrity protection key.

In still another possible implementation, the processing unit 1501 is further configured to encrypt the first data based on the first encryption algorithm and an encryption key.

For related descriptions, refer to the descriptions in the foregoing embodiments. Details are not described herein again.

FIG. 16 is a diagram of a structure of still another communication apparatus according to an embodiment of this application. A communication apparatus 160 may be an independent device, for example, a node, or may be a component, for example, a chip, a software module, or an integrated circuit, included in an independent device. The communication apparatus 160 may include at least one processor 1601 and a communication interface 1602. Optionally, the communication apparatus 160 may further include at least one memory 1603. Further, optionally, the communication apparatus 160 may further include a connection line 1604. The processor 1601, the communication interface 1602, and/or the memory 1603 are/is connected through the connection line 1604, and/or communicate with each other through the connection line 1604 to transmit a control signal and/or a data signal.

The processor 1601 is a module for performing an arithmetic operation and/or a logic operation, and may specifically include one or more of the following modules: a filter, a modem, a power amplifier, a low noise amplifier (low noise amplifier, LNA), a baseband processor, a radio frequency processor, a radio frequency circuit, a central processing unit (central processing unit, CPU), an application processor (application processor, AP), a microcontroller unit (microcontroller unit, MCU), an electronic control unit (electronic control unit, ECU), a graphics processing unit (graphics processing unit, GPU), a microprocessor unit (microprocessor unit, MPU), an application-specific integrated circuit (application-specific integrated circuit, ASIC), an image signal processor (image signal processor, ISP), a digital signal processor (digital signal processor, DSP), a field programmable gate array (field programmable gate array, FPGA), a complex programmable logic device (complex programmable logic device, CPLD), a coprocessor, or the like.

The communication interface 1602 may be configured to provide an information input or output for the at least one processor, or configured to receive a signal sent by the outside and/or send a signal to the outside.

For example, the communication interface 1602 may include an interface circuit.

For example, the communication interface 1602 may include a wired link interface such as an Ethernet cable, or may be a wireless link (Wi-Fi, Bluetooth, universal wireless transmission, a vehicle-mounted short-range communication technology, another short-range wireless communication technology, or the like) interface.

Optionally, the communication interface 1602 may further include a radio frequency transmitter, an antenna, and the like. When the communication interface 1602 includes an antenna, there may be one or more antennas.

In a possible design, if the communication apparatus 160 is an independent device, the communication interface 1602 may include a receiver and a transmitter. The receiver and the transmitter may be a same component or different components. When the receiver and the transmitter are a same component, the component may be referred to as a transceiver.

In another possible design, if the communication apparatus 160 is a chip or a circuit, the communication interface 1602 may include an input interface and an output interface, and the input interface and the output interface may be a same interface or different interfaces.

Optionally, a function of the communication interface 1602 may be implemented by a transceiver circuit or a dedicated transceiver chip.

The memory 1603 is configured to provide storage space, and the storage space may store data such as an operating system and a computer program. The memory 1603 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

Functions and actions of modules or units in the communication apparatus 160 listed above are merely examples for description.

Functional units in the communication apparatus 160 may be configured to implement the foregoing communication method, for example, the communication method shown in FIG. 5, FIG. 10, FIG. 11, FIG. 12, FIG. 13, or FIG. 14, for example, configured to perform the method performed by the first node or the second node.

Optionally, the processor 1601 may be a processor specially configured to perform the foregoing method (for ease of differentiation, the processor is referred to as a dedicated processor), or may be a processor that invokes a computer program to perform the foregoing method (for ease of differentiation, the processor is referred to as a dedicated processor). Optionally, the at least one processor may alternatively include both a dedicated processor and a general-purpose processor.

Optionally, when the communication apparatus 160 includes at least one memory 1603, if the processor 1601 implements the foregoing communication methods by invoking a computer program, the computer program may be stored in the memory 1603.

An embodiment of this application further provides a chip. The chip includes a logic circuit and a communication interface. The communication interface is configured to receive a signal or send a signal, and the logic circuit is configured to receive a signal or send a signal through the communication interface. The chip is configured to implement the foregoing communication method, for example, the communication method shown in FIG. 5, FIG. 10, FIG. 11, FIG. 12, FIG. 13, or FIG. 14.

An embodiment of this application further provides a computer-readable storage medium. The computer-readable storage medium stores instructions. When the instructions are run on at least one processor (or communication apparatus), the foregoing communication method, for example, the communication method shown in FIG. 5, FIG. 10, FIG. 11, FIG. 12, FIG. 13, or FIG. 14 is implemented.

An embodiment of this application further provides a computer program product. The computer program product includes computer instructions, and the computing instructions are used to implement the foregoing communication method, for example, the communication method shown in FIG. 5, FIG. 10, FIG. 11, FIG. 12, FIG. 13, or FIG. 14.

An embodiment of this application further provides a terminal. The terminal includes the foregoing communication apparatus 150 and/or communication apparatus 160.

In a possible implementation, the terminal includes a terminal node. Further, the terminal further includes a first management node and/or a second management node. Further, the terminal further includes a control node.

For example, the terminal may include an intelligent terminal or a transportation vehicle, for example, a vehicle, a robot, an unmanned aerial vehicle, a ship, or a ship. The vehicle is a vehicle in a broad sense, and may be a transportation vehicle (for example, a commercial vehicle, a passenger vehicle, a motorcycle, a flight vehicle, or a train), an industrial vehicle (for example, a forklift, a trailer, or a tractor), an engineering vehicle (for example, an excavator, a bulldozer, or a crane), an agricultural device (for example, a lawn mower or a harvester), or the like. For another example, the robot may be a robot such as an automated guided vehicle (automated guided vehicle, AGV), a walkable conversational robot, or a service robot.

It should be noted that in embodiments of this application, the term "example", "for example", or the like is used to represent giving an example, an illustration, or a description. Any embodiment or design scheme described as an "example" or "for example" in this application should not be explained as being more preferred or having more advantages than another embodiment or design scheme. Exactly, the word "example", "for example", or the like is used to present a related concept in a specific manner.

In embodiments of this application, names of information, apparatuses, and the like are examples of naming for ease of understanding content of this solution. In specific implementation, the names may have other designs. In addition, in different scenarios (for example, different communication layers), names of a same transaction may also have different designs. For example, time resource configuration information may also be referred to as reference information or the like. For another example, different communication layers have different names for encapsulation of service data. A first service is directly transmitted in a form of data at an application layer, but data of the first service is encapsulated in a message of the first service at a network layer for transmission.

In embodiments of this application, "at least one" means one or more, and "a plurality of" means two or more. "At least one of the following items (pieces)" or a similar expression thereof means any combination of these items, including a singular item (piece) or any combination of plural items (pieces).

For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise specified, ordinal numbers such as "first", "second", "M1", "M2", "M3", "M4", "M5", "S1", "S2", and "S3" used in embodiments of this application are used to distinguish a plurality of objects, and are not used to limit a sequence, a time sequence, a priority, or an importance degree of the plurality of objects. For another example, the first node and the second node are merely used to facilitate description of fresh parameters in different implementations, and do not indicate different execution operations, importance degrees, structures, and the like of the first node and the second node.

Based on the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

A person of ordinary skill in the art may understand that all or a part of the steps of the foregoing embodiments may be implemented by hardware or a program instructing related hardware. The program may be stored in a computer-readable storage medium. The storage medium may be a read-only memory, a magnetic disk, an optical disc, or the like.

## Claims

1. A communication method, applied to a first node, wherein the first node is separately connected to a second node and a third node, and the second node and the third node are managed by the first node; and
the method comprises:
generating first information, wherein the first information is used to perform security protection on data transmitted between the second node and the third node; and
sending the first information to the second node, and sending the first information to the third node.

2. The method according to claim 1, wherein sending the first information to the second node comprises:
sending a first message to the second node, wherein the first information is carried in the first message, and the first message indicates the second node to establish a link with the third node; and
sending the first information to the third node comprises:
sending a second message to the third node, wherein the first information is carried in the second message, and the second message indicates the third node to establish a link with the second node.

3. The method according to claim 1, wherein the method further comprises:
sending a first message to the second node, wherein the first message indicates the second node to establish a link with the third node; and
sending a second message to the third node, wherein the second message indicates the third node to establish a link with the second node.

4. The method according to any one of claims 1 to 3, wherein the first information comprises one or more of the following information:
an integrity protection algorithm indication, an integrity protection key indication, an encryption algorithm indication, an encryption key indication, or a first parameter, wherein
the integrity protection algorithm indication indicates a first integrity protection algorithm used for the link between the second node and the third node;
the integrity protection key indication indicates a key used by an integrity protection algorithm;
the encryption algorithm indication indicates a first encryption algorithm used for the link between the second node and the third node;
the encryption key indication indicates a key used by an encryption algorithm; and
the first parameter is used to obtain an input parameter of an encryption and/or integrity protection process between the second node and the third node.

5. The method according to any one of claims 1 to 4, wherein the first information further comprises a first indication, and the first indication is carried in a first field; and
when the first field is a first value, it indicates that both encryption and integrity protection for the link between the second node and the third node are enabled; or
when the first field is a second value, it indicates that encryption for the link between the second node and the third node is disabled and integrity protection for the link between the second node and the third node is enabled; or
when the first field is a third value, it indicates that encryption for the link between the second node and the third node is enabled and integrity protection for the link between the second node and the third node is disabled; or
when the first field is a fourth value, it indicates that encryption and integrity protection for the link between the second node and the third node are disabled.

6. A communication method, applied to a second node, wherein the second node is connected to a first node, the first node is further connected to a third node, and the first node manages the second node and the third node; and
the method comprises:
receiving first information from the first node; and
performing security protection on first data based on the first information, wherein the first data is data transmitted between the second node and the third node.

7. The method according to claim 6, wherein receiving the first information from the first node comprises:
receiving a first message from the first node, wherein the first information is carried in the first message, and the first message indicates the second node to establish a link with the third node.

8. The method according to claim 6, wherein the method further comprises:
receiving a first message from the first node, wherein the first message indicates the second node to establish a link with the third node.

9. The method according to any one of claims 6 to 8, wherein the method further comprises: establishing the link with the third node.

10. The method according to any one of claims 6 to 9, wherein the first information comprises one or more of the following information:
an integrity protection algorithm indication, an integrity protection key indication, an encryption algorithm indication, an encryption key indication, or a first parameter, wherein
the integrity protection algorithm indication indicates a first integrity protection algorithm used for the link between the second node and the third node, and the first integrity protection algorithm is an algorithm with a highest priority in integrity protection algorithms supported by the second node and the third node;
the integrity protection key indication indicates a key used by an integrity protection algorithm;
the encryption algorithm indication indicates a first encryption algorithm used for the link between the second node and the third node, and the first encryption algorithm is an algorithm with a highest priority in encryption algorithms supported by the second node and the third node;
the encryption key indication indicates a key used by an encryption algorithm; and
the first parameter is used to obtain an input parameter of an encryption and/or integrity protection process between the second node and the third node.

11. The method according to any one of claims 6 to 10, wherein the first information comprises the integrity protection algorithm indication and the integrity protection key indication, the integrity protection algorithm indication indicates the first integrity protection algorithm, and the integrity protection key indication indicates the integrity protection key; and
performing security protection on the first data based on the first information comprises:
performing integrity protection on the first data based on the first integrity protection algorithm and the integrity protection key.

12. The method according to claim 11, wherein performing integrity protection on the first data based on the first integrity protection algorithm and the integrity protection key comprises:
obtaining an integrity check code through calculation based on the first integrity protection algorithm, the integrity protection key, a first integrity protection input, and the first data, wherein the integrity check code is used to check integrity of the first data;
the first integrity protection input comprises a direction indication and/or a second parameter;
the direction indication indicates a sequence in which a transmitter and a receiver of the first data perform data transmission in an event; and
the second parameter is related to the first parameter comprised in the first information, or the second parameter is related to a third parameter from the second node and/or a fourth parameter from the third node.

13. The method according to any one of claims 6 to 12, wherein the first information comprises the encryption algorithm indication and the encryption key indication, the encryption algorithm indication indicates the first encryption algorithm, and the encryption key indication indicates the encryption key; and
performing secure communication with the third node based on the first information comprises:
encrypting the first data based on the first encryption algorithm and the encryption key.

14. The method according to claim 13, wherein encrypting the first data based on the first encryption algorithm and the encryption key comprises:
encrypting the first data based on the first encryption algorithm, the encryption key, and an encryption input, wherein
the encryption input comprises the direction indication and/or the second parameter.

15. The method according to claim 12 or 14, wherein
when the direction indication is a fifth value, it indicates that a first transmission node performs sending and a late transmission node performs receiving; or
when the direction indication is a sixth value, it indicates that a late transmission node performs sending and a first transmission node performs receiving, wherein the first transmission node is a node that performs data transmission first in the event, and the late transmission node is a node that performs data transmission later in the event.

16. The method according to any one of claims 6 to 15, wherein the first information further comprises a first indication, and the first indication is carried in a first field; and
when the first field is a first value, it indicates that both encryption and integrity protection for the link between the second node and the third node are enabled; or
when the first field is a second value, it indicates that encryption for the link between the second node and the third node is disabled and integrity protection for the link between the second node and the third node is enabled; or
when the first field is a third value, it indicates that encryption for the link between the second node and the third node is enabled and integrity protection for the link between the second node and the third node is disabled; or
when the first field is a fourth value, it indicates that encryption for the link between the second node and the third node is disabled and integrity protection for the link between the second node and the third node is disabled.

17. A communication method, applied to a second node, wherein the second node is connected to a first node, the first node is further connected to a third node, and the first node manages the second node and the third node; and
the method comprises:
receiving a first message from the first node, wherein the first message indicates the second node to establish a link with the third node;
establishing the link with the third node;
negotiating with the third node to determine first information; and
performing security protection on first data based on the first information, wherein the first data is data transmitted between the second node and the third node.

18. The method according to claim 17, wherein the first information comprises one or more of the following information:
an integrity protection algorithm indication, an integrity protection key indication, an encryption algorithm indication, an encryption key indication, or a first parameter, wherein
the integrity protection algorithm indication indicates a first integrity protection algorithm used for the link between the second node and the third node;
the integrity protection key indication indicates a key used by an integrity protection algorithm;
the encryption algorithm indication indicates a first encryption algorithm used for the link between the second node and the third node;
the encryption key indication indicates a key used by an encryption algorithm; and
the first parameter is used to obtain an input parameter of an encryption and/or integrity protection process between the second node and the third node.

19. The method according to claim 17 or 18, wherein the first message comprises a first indication, and the first indication is carried in a first field; and
when the first field is a first value, it indicates that both encryption and integrity protection for the link between the second node and the third node are enabled; or
when the first field is a second value, it indicates that encryption for the link between the second node and the third node is disabled and integrity protection for the link between the second node and the third node is enabled; or
when the first field is a third value, it indicates that encryption for the link between the second node and the third node is enabled and integrity protection for the link between the second node and the third node is disabled; or
when the first field is a fourth value, it indicates that encryption for the link between the second node and the third node is enabled and integrity protection for the link between the second node and the third node is disabled.

20. A communication apparatus, comprising a unit or a module configured to perform the method according to any one of claims 1 to 5; or
a unit or a module configured to perform the method according to any one of claims 6 to 16; or
a unit or a module configured to perform the method according to any one of claims 17 to 19.

21. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 19 via a logic circuit or by executing code instructions.

22. A communication system, wherein the communication system comprises a first node, a second node, and a third node, the second node is configured to perform the communication method according to any one of claims 1 to 5, and the second node and the third node are configured to implement the communication method according to any one of claims 6 to 16.

23. A communication system, wherein the communication system comprises a first node, a second node, and a third node, the second node is configured to send a first message to the second node and send the second message to the third node, and the second node and the third node are configured to implement the communication method according to any one of claims 17 to 19.

24. A terminal, wherein the terminal comprises the communication apparatus according to claim 20 or 21, or comprises the communication system according to claim 22 or 23.

25. A computer-readable storage medium, wherein the computer-readable storage medium is configured to store a computer program, and when the computer program is executed by a processor, a communication apparatus comprising the processor is enabled to perform the method according to any one of claims 1 to 19.

26. A computer program, wherein when the computer program is executed by a processor, a communication apparatus comprising the processor is enabled to perform the method according to any one of claims 1 to 19.
